# EUROPEAN PATENT SPECIFICATION

(11) **EP 2 405 668 B1**
(45) Date of publication and mention of the grant of the patent: **16.09.2015**
(21) Application number: 11167454.5
(22) Date of filing: 25.05.2011
(51) Int. Cl.: H04N 13/04

(54) **Controlling a video image display apparatus and a pair of shutter glasses for stereoscopic image display**
Steuerung einer Video-Bildanzeigevorrichtung und eines Shutterbrillenpaares zur stereoskopischen Bildanzeige
Commande d'un appareil d'affichage vidéo et d'une paire de verres d'obturateur pour affichage d'images stéréoscopiques

(30) Priority: 07.07.2010 TW 099122342
(43) Date of publication of application: 11.01.2012
(73) Proprietor: Acer Incorporated, New Taipei City 221 (TW)
(72) Inventor: Ko, Chueh-Pin, 221, New Taipei City (TW)
(74) Representative: Becker Kurig Straus

(56) References cited:
- US-A1- 2007 229 395
- US-A1- 2010 066 820

## Description

The present invention relates to a pair of shutter glasses capable of being utilized for viewing stereo images presented by a video output apparatus and a method for controlling a pair of shutter glasses according to the pre-characterizing clauses of claims 1, 3, 6 and 8.

With the development of science and technology, users are pursuing stereoscopic and more real image displays rather than high quality images. There are two techniques of present stereo image display. One is to use a video output apparatus which collaborates with glasses (such as anaglyph glasses, polarization glasses or shutter glasses), while the other is to directly use a video output apparatus without any accompanying glasses. No matter which technique is utilized, the main theory of stereo image display is to make the left eye and the right eye see different images, thus the brain will regard the different images seen from two eyes as stereo images.

For a pair of shutter glasses, it is widely used for users to view stereo images presented by a video output apparatus. The pair of shutter glasses includes two shutter lenses, and allow user's left eye to see left-eye images and user's right eye to see right-eye images by properly switching the shutter lenses between an on-state (or called open state) and an off-state (or called close state). In general, each shutter lens of the pair of shutter glasses is switched continually between an on-state and an off-state. For example, when the shutter lens corresponding to left eye is in an on-state in a certain time period, the shutter lens corresponding to right eye is in an off-state; in addition, when the shutter lens corresponding to right eye is in an on-state, the shutter lens corresponding to left eye is in an off-state. Therefore, the ambient brightness perceived by the user is lower than real ambient brightness. On the other hand, according to the polarized direction of image light output presented by the video output apparatus, the shutter lenses of the pair of shutter glasses used to collaborate with the video output apparatus have a related polarization setting. However, as ambient light comprises light beams of different angles. When the shutter lens of the pair of shutter glasses is in an on-state, only light beams which conform to the polarization setting of the shutter lens will penetrate through the shutter lens, and the ambient brightness perceived by the user is thus lower than the real ambient brightness. If the user feels lack of ambient brightness when wearing the pair of shutter glasses, he/she may not identify items, such as a keyboard or remote control, beyond the screen of the video output apparatus clearly, leading to inconvenience in stereo image viewing for users.

Moreover, suppose that a liquid crystal layer is employed in the shutter lens of the pair of shutter glasses to control the switch between an on-state and an off-state. In general, when there is no voltage applied to the liquid crystal layer, the shutter lens is in an on-state and allows light beams to penetrate therethrough. As is described above, under the control of well known control mechanism, the two shutter lenses of the pair of shutter glasses stay in an on-state, alternately. Therefore, when there is no voltage applied to the liquid crystal layer of one shutter lens for allowing light beams to penetrate therethrough, the liquid crystal layer of the other one of shutter lens requires voltage applied thereto for blocking light beams to penetrate therethrough. Thus, if the shutter lens stays in an off-state longer, the power consumption of the pair of shutter glasses is increased accordingly.

As described in US Patent Publication No. 2007/229, 395. the liquid crystal mechanism requires images (pixels) to be overwritten wherein the pixels retain their colour and intensity until they are updated. This may cause 'ghost' images to appear to a user. To prevent this phenomenon, both the right lens and left lens of the shutter glasses can be controlled to simultaneously be in an off-state. Although this removes the crosstalk issue, power consumption is thereby increased.

US Patent Publication No. 2010/066, 820 also details this crosstalk issue. To solve the problem of 'ghost' images, a backlight unit is turned off during a time period when the lefteye image and right-eye image are mixed, and only turned back on again when only one of the lenses is in an on-state.

In conclusion, how to increase the ambient brightness perceived by the user when wearing pair of shutter glasses and/or decrease power consumption of pair of shutter glasses without affecting user's viewing of stereo images is an issue to be solved immediately in this technical field.

This in mind, the present invention aims at providing a pair of shutter glasses and a method for controlling a pair of shutter glasses, which may lengthen the time period in which the shutter lens of the pair of shutter glasses is in an on-state, and further increase the ambient brightness perceived by the user and/or decrease the power consumption of pair of shutter glasses effectively.

This is achieved by a pair of shutter glasses and a method for controlling pair of shutter glasses according to claims 1, 4, 7, and 10. The dependent claims pertain to corresponding further developments and improvements.

As will be seen more clearly from the detailed description following below, a claimed method for controlling a pair of shutter glasses utilized for viewing stereo images presented by a video output apparatus is provided. The video output apparatus respectively outputs a first image and a second image during a plurality of image output periods, alternately. One of the first image and the second image is a left-eye image, and the other one of the first image and the second image is a right-eye image. Each image output period comprises an image driving period and an image stabilization period. The claimed method further comprises: controlling a first shutter lens of the pair of shutter glasses to be switched between an on-state and an off-state, wherein the shutter lens stays in an on-state within an image stabilization period corresponding to a specific first image, and continuously stays in the on-state until the first shutter lens is switched from the on-state to the off-state within an image driving period corresponding to a specific second image immediately following the specific first image; and controlling a second shutter lens of the pair of shutter glasses to be switched between an on-state and an off-state, wherein the shutter lens is switched from the off-state to the on-state within an image driving period corresponding to the specific second image, and continuously stays in the on-state and thereby remain in the on-state within an image stabilization period corresponding to the specific second image. One of the first shutter lens and the second shutter lens is utilized for viewing left-eye images, and the other one of the first shutter lens and the second lens is utilized for viewing right-eye images. A first shutter-on period is between an end point of the image stabilization period corresponding to the specific first image and a time point at which the first shutter lens is switched from the on-state to the off-state within the image driving period corresponding to the specific second image. A second shutter-on period is between a time point at which the second shutter lens is switched from the off-state to the on-state within the image driving period corresponding to the specific second image and an end point of the image driving period corresponding to the specific second image. The first shutter-on period is at least partly overlapped with the second shutter-on period.

A claimed pair of shutter glasses utilized for viewing stereo images presented by a video output apparatus is provided. The video output apparatus respectively outputs a first image and a second image during a plurality of image output periods, alternately. One of the first image and the second image is a left-eye image, and the other one of the first image and the second image is a right-eye image. Each image output period comprises an image driving period and an image stabilization period. The claimed pair of shutter glasses further comprises a first shutter lens, a second shutter lens and a control circuit. One of the first shutter lens and the second shutter lens is utilized for viewing left-eye images, and the other one of the first shutter lens and the second lens is utilized for viewing right-eye images. The control circuit is electronically connected to the first shutter lens and the second shutter lens, in order to control the first shutter lens to be switched between an on-state and an off-state, and control the second shutter lens to be switched between an on-state and an off-state, wherein the control circuit controls the first shutter lens to stay in the on-state within an image stabilization period corresponding to a specific first image, and continuously stay in the on-state until the first shutter lens is switched from the on-state to the off-state within an image driving period corresponding to a specific second image immediately following the specific first image; the control circuit further controls the second shutter lens to be switched form the off-state to the on-state within the image driving period corresponding to the specific second image, and continuously stay in the on-state and thereby remain in the on-state within an image stabilization period corresponding to the specific second image. A first shutter-on period is between an end point of the image stabilization period corresponding to the specific first image and a time point at which the second shutter lens is switched from the on-state to the off-state within the image driving period corresponding to the specific second image. A second shutter-on period is between a time point at which the second shutter lens is switched from the off-state to the on-state within the image driving period corresponding to the specific second image and an end point of the image driving period corresponding to the specific second image. The first shutter-on period is at least partly overlapped with the second shutter-on period.

A claimed method for controlling a pair of shutter glasses utilized for viewing stereo images presented by a video output apparatus is provided. The video output apparatus outputs a group of first images and a group of second images, alternately, and successively outputs a primary first image and at least a secondary first image included in the group of first images in order, during a successive plurality of first image output periods, respectively, and successively outputs a primary second image and at least a secondary second image included in the group of second images in order, during a successive plurality of second image output periods, respectively. One of the group of first images and the group of second images is a group of left-eye images, and the other one of the group of first images and the group of second images is a group of right-eye images. The claimed method further comprises: controlling a first shutter lens of the pair of shutter glasses to be switched between an on-state and an off-state, wherein the shutter lens stays in an on-state within a first image output period corresponding to a specific secondary first image, and continuously stays in the on-state until the first shutter lens is switched from the on-state to the off-state within a second image output period corresponding to a specific primary second image immediately following the specific secondary first image; and controlling a second shutter lens of the pair of shutter glasses to be switched between an on-state and an off-state, wherein the second shutter lens is switched from the off-state to the on-state within a second image output period corresponding to the specific primary second image, and continuously stays in the on-state and thereby remain in the on-state within a second image output period corresponding to a specific secondary second image immediately following the specific primary second image. One of the first shutter lens and the second shutter lens is utilized for viewing left-eye images, and the other one of the first shutter lens and the second lens is utilized for viewing right-eye images. A first shutter-on period is between an end point of the first image output period corresponding to the specific secondary first image and a time point at which the first shutter lens is switched from the on-state to the off-state within the second image output period corresponding to the specific primary second image. A second shutter-on period is between a time point at which the second shutter lens is switched from the off-state to the on-state within the second image output period corresponding to the specific primary second image and an end point of the second image output period corresponding to the specific primary second image. The first shutter-on period is at least partly overlapped with the second shutter-on period.

A claimed pair of shutter glasses utilized for viewing stereo images presented by a video output apparatus is provided. The video output apparatus outputs a group of first images and a group of second images, alternately, and successively outputs a primary first image and at least a secondary first image included in the group of first images in order, during a successive plurality of first image output periods, respectively, and successively outputs a primary second image and at least a secondary second image included in the group of second images in order, during a successive plurality of second image output periods, respectively. One of the group of the first images and the group of second images is a group of left-eye images, and the other group of the first images and the group of second images is a group of right-eye images. The claimed pair of shutter glasses further comprises a first shutter lens, a second shutter lens and a control circuit. One of the first shutter lens and the second shutter lens is utilized for viewing left-eye images, and the other one of the first shutter lens and the second shutter lens is utilized for viewing right-eye images. The control circuit is electronically connected to the first shutter lens and the second shutter lens, in order to control the first shutter lens to be switched between an on-state and an off-state, and control the second shutter lens to be switched between an on-state and an off-state, wherein the control circuit controls the first shutter lens to stay in the on-state within a first image output period corresponding to a specific secondary first image, and continuously stay in the on-state until the first shutter lens is switched from the on-state to the off-state within a second image output period corresponding to a specific primary second image immediately following the specific secondary first image; the control circuit further controls the second shutter lens to be switched form the off-state to the on-state within the second image output period corresponding to the specific primary second image, and continuously stay in the on-state and thereby remain in the on-state within a second image output period corresponding to a specific secondary second image immediately following the specific primary second image. A first shutter-on period is between an end point of the image stabilization period corresponding to the specific first image and a time point at which the second shutter lens is switched from the on-state to the off-state within the image driving period corresponding to the specific second image. A second shutter-on period is between a time point at which the second shutter lens is switched from the off-state to the on-state within the image driving period corresponding to the specific second image and an end point of the image driving period corresponding to the specific second image. The first shutter-on period is at least partly overlapped with the second shutter-on period.

In the following, the invention is further illustrated by way of example, taking reference to the accompanying drawings. Thereof
FIG. 1 is a function block diagram of a pair of shutter glasses utilized for viewing stereo images presented by a video output apparatus;
FIG. 2 is a sequence diagram of the first control method employed for controlling the pair of shutter glasses shown in FIG. 1;
FIG. 3 is a continued sequence diagram of the operation shown in FIG. 2 based on a concept of using mixed different glasses cycles;
FIG. 4 is a sequence diagram of the second control method employed for controlling the pair of shutter glasses shown in FIG. 1;
FIG. 5 is a sequence diagram of the third control method employed for controlling the pair of shutter glasses shown in FIG. 1;
FIG. 6 is a sequence diagram of the fourth control method employed for controlling the pair of shutter glasses shown in FIG. 1;
FIG. 7 is a sequence diagram of the fifth control method employed for controlling the pair of shutter glasses shown in FIG. 1;
FIG. 8 is a sequence diagram of the sixth control method employed for controlling the pair of shutter glasses shown in FIG. 1;
FIG. 9 is a sequence diagram of the seventh control method employed for controlling the pair of shutter glasses shown in FIG. 1;
FIG. 10 is a sequence diagram of the eighth control method employed for controlling the pair of shutter glasses shown in FIG. 1;
FIG. 11 is a sequence diagram of the ninth control method employed for controlling the pair of shutter glasses shown in FIG. 1;
FIG. 12 is a continued sequence diagram of the operation shown in FIG. 11 based on a concept of using mixed different glasses cycles;
FIG. 13 is a sequence diagram of the tenth control method employed for controlling the pair of shutter glasses shown in FIG. 1;
FIG. 14 is a sequence diagram of the eleventh control method employed for controlling the pair of shutter glasses shown in FIG. 1;

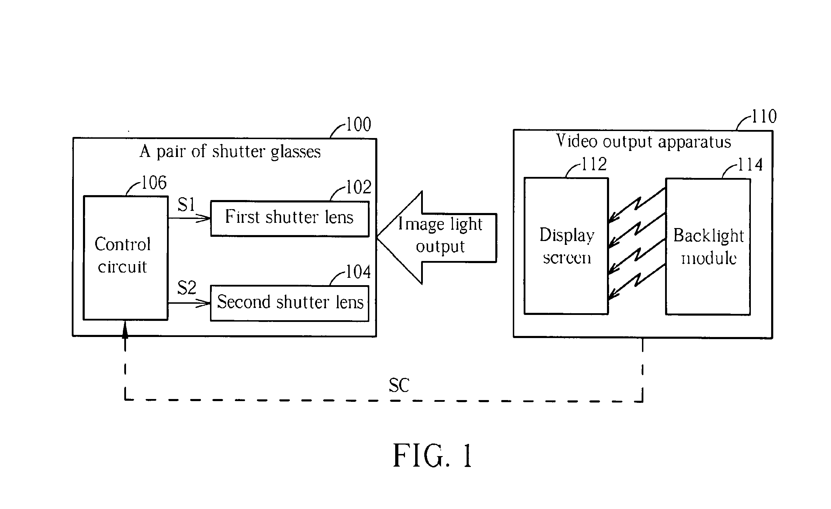

FIG. 1 5 is a sequence diagram of the twelfth control method employed for controlling the pair of shutter glasses shown in FIG. 1;

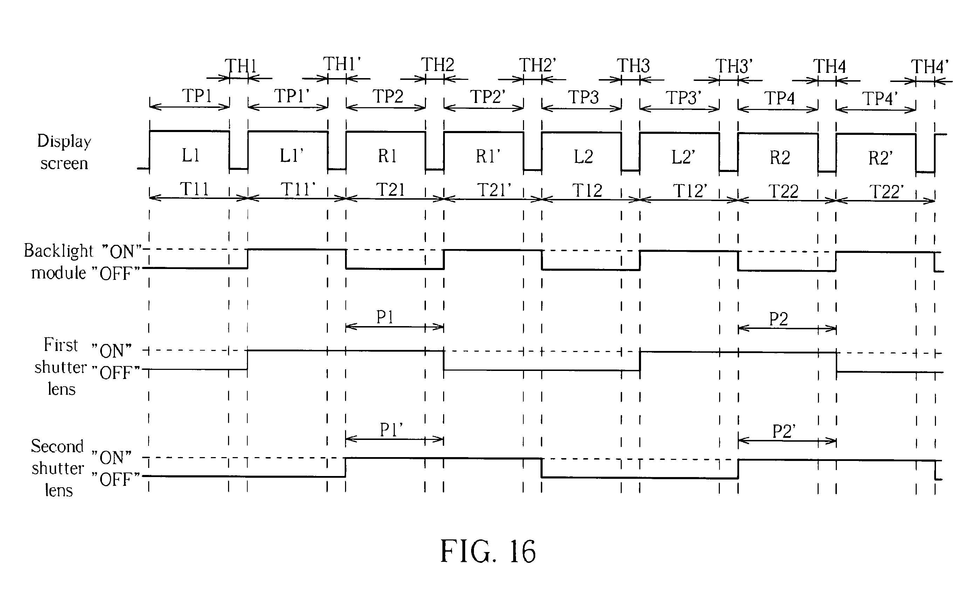

FIG. 16 is a sequence diagram of the thirteenth control method employed for controlling the pair of shutter glasses shown in FIG. 1;

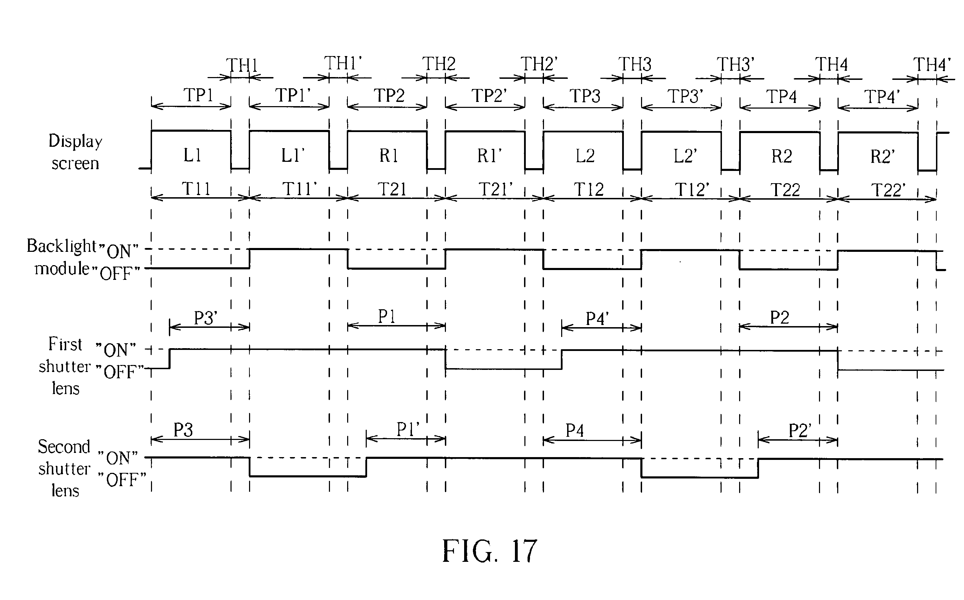

FIG. 17 is a sequence diagram of the fourteenth control method employed for controlling the pair of shutter glasses shown in FIG. 1;

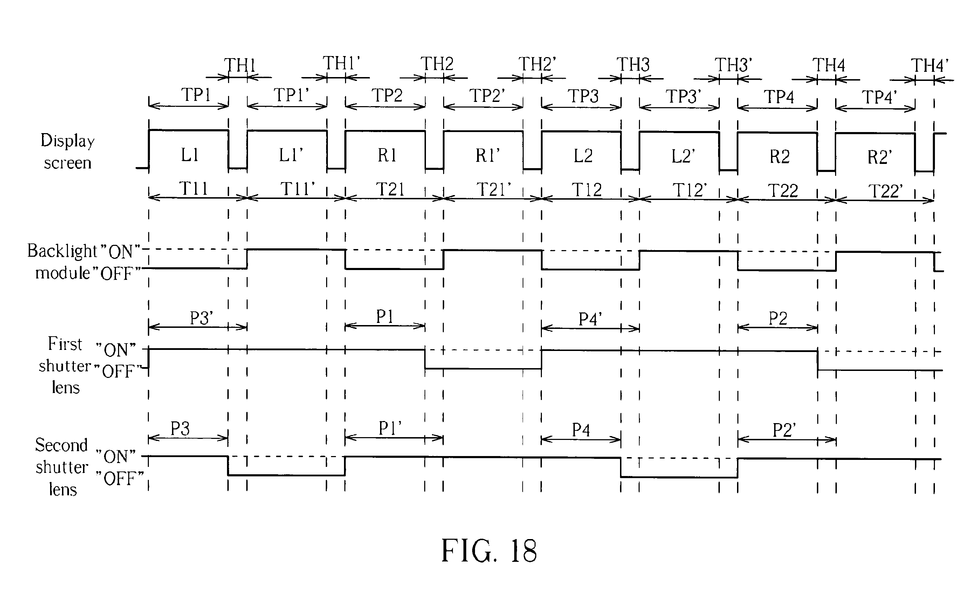

FIG. 18 is a sequence diagram of the fifteenth control method employed for controlling the pair of shutter glasses shown in FIG. 1; and

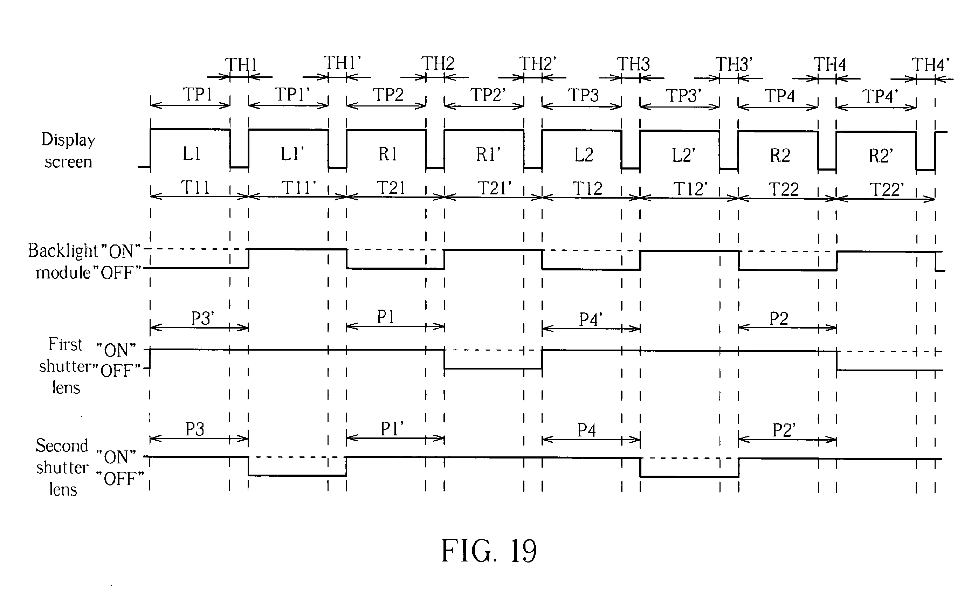

FIG. 19 is a sequence diagram of the sixteenth control method employed for controlling the pair of shutter glasses shown in FIG. 1.

Please refer to FIG. 1, which is a function block diagram of a pair of shutter glasses utilized for viewing stereo images presented by a video output apparatus. In present exemplary embodiment, the pair of shutter glasses 100 comprises, but is not limited to, a first shutter lens 102, a second shutter lens 104 and a control circuit 106. One of the first shutter lens 102 and second shutter lens 104 (e.g., the first shutter lens 102) is utilized for viewing left-eye images, and the other one of the first shutter lens 102 and the second shutter lens 104 (e.g., the second shutter lens 104) is utilized for viewing right-eye glasses. Besides, the control circuit 106 respectively outputs control signals S1 and S2 to the first shutter lens 102 and the second shutter lens 104, in order to control the first shutter lens 102 to be switched between an on-state (or called open sate) and an off-state (or called close state) and control the second shutter lens 104 to be switched between the on-state and the off-state. For example, the first shutter lens 102 and the second shutter lens 104 have liquid crystal layers, respectively. Therefore, the control signal S1/S2 may be a control voltage utilized for controlling the rotation of the liquid crystal cells (LC cells) in the liquid crystal layer to control light transmission rate. However, this is for illustrative purposes only, and is not meant to be a limitation of the present invention. For example, any structure that may control light transmission rate may be utilized for realizing the first shutter lens 102 and the second shutter lens 104. This also achieves the objective of controlling the first shutter lens 102 and the second shutter lens 104 to be switched between the on-state and the off-state.

In the present invention, the "off-state" described above means that the first shutter lens 1 02/the second shutter lens 1 04 is totally opaque (i.e., the light transmission rate is 0%). Therefore, as long as the first shutter lens/the second shutter lens is not totally opaque (i.e., the light transmission rate is not 0%), it may be regarded as staying in the "on-state". For example, when the first shutter lens 1 02/the second shutter lens 1 04 is fully open (i.e., the light transmission rate is 100%), half open (i.e., the light transmission rate is 50%), or slightly open (i.e., the light transmission rate is 0.1%), the first shutter lens 1 02/the second shutter lens 1 04 may be regarded as staying in an on-state. In brief, when the light transmission rate of the first shutter lens 102 /the second shutter lens 1 04 is larger than 0% (but smaller than or equal to 100%), the first shutter lens 102 /the second shutter lens 104 is staying in an on-state.

A user may wear pair of shutter glasses 100 to view stereo images presented by a video output apparatus 100. For example, in the exemplary embodiment of FIG. 1, the video output apparatus 100 may be a liquid crystal display (LCD), and therefore comprises, but is not limited to, a display screen (e.g., an LCD panel) 112 and a backlight module 114. Backlight module 114 provides light source needed by the display screen 112, and shuttle glasses 100 control whether image light output generated by the display screen 112 may reach user's left eye or right eye. Please note that the video output apparatus 110 is not limited to be realized by the LCD apparatus, that is, the video output apparatus 110 may by any video output apparatus that may collaborates with the pair of shutter glasses 100 for presenting stereo images to the user. For example, the video output apparatus 110 may be an organic Light-Emitting Diode (OLED) display, a plasma display, a digital light processing (DLP) display/projector, a liquid crystal on silicon (LCoS) display/projector, etc.

The pair of shutter glasses 100 may have the first shutter lens 102 and the second shutter lens 104 switched between an on-state and an off-state under the control of the control circuit 106. In this way, the ambient brightness perceived by the user may be increased and/or power consumption of the pair of shutter glasses may be decreased without affecting user's viewing of stereo images. The pair of shutter glasses 100 may receive reference information SC from the video output apparatus 110 through wired or wireless transmission (e.g., infrared transmission, ZigBee transmission, ultrawideband (UWB) transmission, WiFi transmission, radio frequency (RF) transmission, DLP light signal transmission or Bluetooth transmission), and the control circuit 106 generates the control signals S1 and S2 according to the reference information SC. For example, reference information may be a timing sequence of image output presented by display screen 112, and control circuit 106 may automatically generate needed control signals S1 and S2 according to the reference information SC. In other words, video output apparatus 110 provides a synchronization signal rather than the control information of the timing when the first shutter lens 102/the second shutter lens 104 should be open or close; instead, the control circuit 106 controls the timing when the first shutter lens 102 /the second shutter lens 104 should be open or close according to the synchronization signal provided by the video output apparatus 110. In an alternative design, reference information SC may be directly be the control information of the first shutter lens 102 and the second shutter lens 104 (i.e., the video output apparatus 110 dominates the timing when the first shutter lens 102/the second shutter lens 104 should be open or close). In this way, the control circuit 106 generates corresponding control signals S1 and S2 simply according to the received reference information SC. Please note that what described above is only an exemplary embodiment, and is not meant to be a limitation to the present invention.

In present exemplary embodiment, there are two control mechanisms employed for controlling the first shutter lens 102 and the second shutter lens 104: one is a shutter lens control mechanism for the video output apparatus 110 operating under a lower refresh rate (e.g., 60 Hz or 1 20 Hz), and the other one is a shutter lens control mechanism for the video output apparatus 110 operating under a higher refresh rate (e.g., 240 Hz or 480 Hz). In the following, a plurality of examples are given to provide further illustration for these two shutter lens control mechanisms.

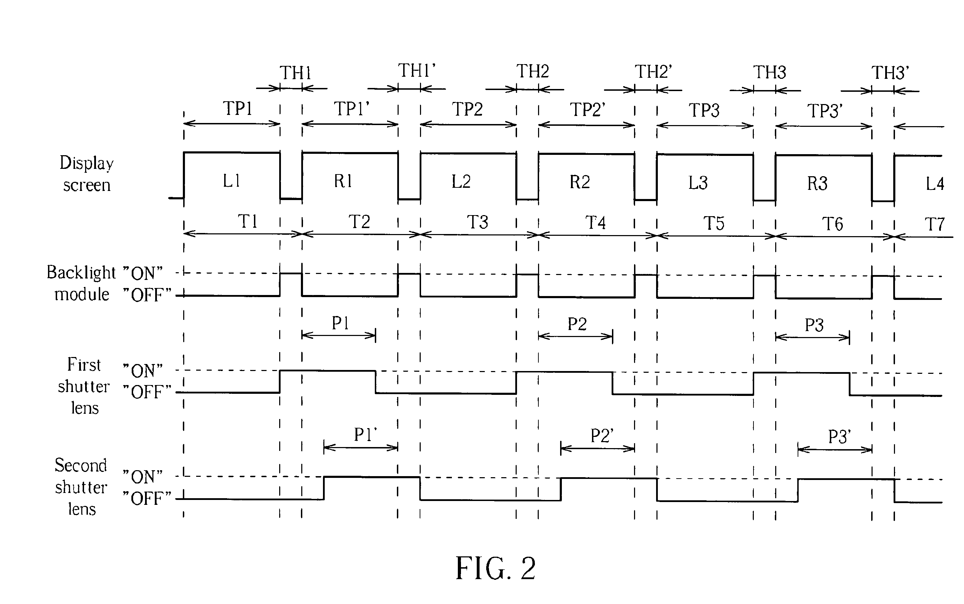

Please refer to FIG. 2, which is a sequence diagram of the first control method employed for controlling the pair of shutter glasses 100 shown in FIG. 1. In this exemplary embodiment, the video output apparatus 110 operates under a lower refresh rate, such as 60 Hz, 96 Hz, 100 Hz, 110 Hz or 1 20 Hz. As shown in FIG. 2, the video output apparatus 110 respectively outputs a first image (e.g., L1, L2, L3 or L4) and a second image (e.g., R1, R2 or R3) during a plurality of image output periods (e.g., T1 -T7), alternately, wherein one of the first image and the second image is a left-eye image, and the other one of the first image and the second image is a right-eye image. In other words, in one exemplary embodiment, the first images L1, L2, L3 and L4 stand for left-eye images and the second images R1, R2 and R3 stand for right-eye images; however, in another exemplary embodiment, the first images L1, L2, L3 and L4 stand for right-eye images and the second images R1, R2 and R3 stand for left-eye images. Besides, as shown in FIG. 2, each image output period comprises an image driving period and an image stabilization period. For example, the image output period T1 comprises an image driving period TP1 and an image stabilization period TH1, and the image output period T2 comprises an image driving period TP1' and an image stabilization period TH1', and so on. Please note that, according to the display technique used, each image stabilization period may comprise a non-image-driving period or an image maintaining period. For example, finishing transmitting an image driving signal within an image driving period or not transmitting any image driving signal within an image stabilization period would make the image now regarded as being in a stabilizing state. For example, as to pixels (e.g., liquid crystal cells or OLED units), a pixel may be regarded as operating in an image stabilization period starting from the time point when the pixel becomes stable due to being driven by the image driving signal transmitted within the image driving period. On the other hand, a pixel may also be regarded as operating in an image stabilization period starting from the time point when there is no image driving signal transmitted to the pixel.

In each image driving period, the display screen 112 (e.g., an LCD panel) successively sets pixels according to the display date, wherein the pixels are driven line by line from the top to the bottom in an image and pixel by pixel from the left to the right in each line of the image to thereby output the image to be displayed now. Alternatively, according to a different placement setting or hardware design of the LCD panel, the display screen 112 may output the image to be displayed by successively setting pixels according to the display date, wherein the pixels are driven line by line from the bottom to the top in an image and pixel by pixel from the right to the left in each line of the image, or may be driven according to other pixel updating sequence. In short, the display screen 112 will replace the previous image already displayed with a present image to be displayed. Therefore, before the present image to be displayed has totally replaced the previous image displayed on the display screen 112, the display screen 112 will output an image that comprises part of the present image and part of the previous image within the image driving period. On the other hand, within the following image stabilization period, the display screen 112 will wait for the image stabilization of the present image to be displayed. For example, the display screen 112 will not drive pixels according to any display date. That is, each image stabilization period may be a vertical blanking interval (VBI).

As described above, the control circuit 106 controls the first shutter lens 102 to be switched between the on-state ("ON") and the off-state ("OFF"), and controls the second shutter lens 104 to be switched between the on-state ("ON") and the off-state ("OFF"). In this exemplary embodiment, the control circuit 106 controls the first shutter lens 102 to stay in the on-state within the image stabilization period (e.g., TH1, TH2 or TH3) corresponding to a specific first image (e.g., L1, L2 or L3) and continuously stay in the on-state until the first shutter lens 102 is switched from the on-state to the off-state within the image driving period (e.g., TP1', TP2' or TP3') corresponding to a specific second image (e.g., R1, R2 or R3) immediately following the specific first image, as shown in FIG. 2. In the present exemplary embodiment, the first shutter lens 102 is switched from the off-state to the on-state from the start point of the image stabilization period, and is switched from the on-state to the off-state before the end point of the following image driving period. On the other hand, the control circuit 106 controls the second shutter lens 104 to be switched from the off-state to the on-state within the image driving period (e.g., TP1', TP2' or TP3') corresponding to the specific second image (e.g., R1, R2 or R3), and continuously stay in the on-state to thereby remain in the on-state within the image stabilization period (e.g., TH1', TH2' or TH3') corresponding to the same specific second image (e.g., R1, R2 or R3), as shown in FIG. 2. In the present exemplary embodiment, the second shutter lens 104 is switched from the off-state to the on-state within the image driving period preceding the image stabilization period, and is not switched from the on-state to the off-state until the end point of the image stabilization period.

Thus, a first shutter-on period (e.g., P1, P2 or P3) is between the end point of the image stabilization period corresponding to the specific first image and the time point at which the first shutter lens is switched from the on-state to the off-state within the image driving period corresponding to the specific second image; similarly, a second shutter-on period (e.g., P1', P2' or P3') is between the time point at which the second shutter lens 104 is switched from the off-state to the on-state within the image driving period corresponding to the specific second image and the end point of the image driving period corresponding to the specific second image. Please note that the first shutter-on period is at least partly overlapped with the second shutter-on period. For example, P1 is partly overlapped with P1', P2 is partly overlapped with P2', and P3 is partly overlapped with P3'.

In other words, according to the operating sequence shown in FIG. 2, the control circuit 106 controls the first shutter lens 102 to stay in an on-state within an image stabilization period corresponding to a specific first image, and controls the second shutter lens 104 to stay in the on-state within an image stabilization period corresponding to a specific second image immediately following the specific first image. Besides, the control circuit 106 further controls the first shutter lens 102 and the second shutter lens 104 to simultaneously stay in the on-state only within a single continuous time period of an image driving period corresponding to the specific second image.

Please note that FIG. 2 only shows that the control circuit 106 controls the first shutter lens 102 and the second shutter lens 104 during an operating time period including, for example, image output periods T1 -T6. In fact, the control circuit 106 will repeat the same control mechanism mentioned above for controlling the first shutter lens 102 and the second shutter lens 104 to be switched between the on-state to the off-state by referring to the same glasses cycle (i.e., the cycle that left eye and right eye respectively view the image once) or different glasses cycles within the previous operating period(s) (e.g., the image output period preceding the image output period T1) and the following operating period(s) (e.g., the image output period next to the image output period T6).

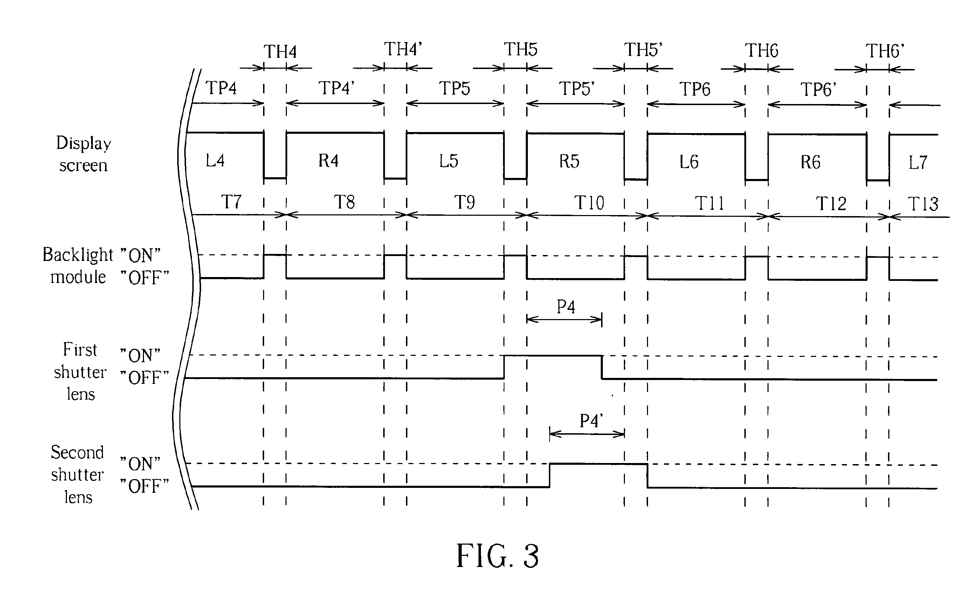

As to the operation with mixed glasses cycles, please refer to FIG. 2 in conjunction with FIG. 3. FIG. 3 is a continued sequence diagram of the operation in FIG. 2 based on the concept of using mixed different glasses cycles. As shown in FIG. 2, the original glasses cycle is equal to a sum of image output periods of two images (e.g., T1 +T2 or T3+T4). However, after the image stabilization period TH2' ends, the glasses cycle is expanded to a sum of image output periods of four images (e.g., T5+T6+T7+T8 or T9+T10+T11+T12). In the present exemplary embodiment, the first shutter lens 102 is switched from the off-state to the on-state at the start point of the image stabilization period TH5 corresponding to the first image L5, and the second shutter lens 104 is switched from the off-state to the on-state within the image driving period TP5' corresponding to the second image R5. Please note that using a sum of image output periods of four images as another glasses cycle is for illustrative purposes only, and is not meant to be a limitation to the present invention. In fact, the number of image output periods covered in one glasses cycle may be adjusted according to the actual application requirement/consideration. Besides, in the exemplary embodiment of mixed different glasses cycles as described above, the same control mechanism is repeated in another longer glasses cycle. However, in this longer glasses cycle, other control mechanism(s), such as other control mechanism(s) disclosed below, may be employed. Thus, within the time period (e.g., T7-T8) that the original control mechanism has no control over the on/off-state of the shutter lenses, other control mechanism(s) may be active to control the on/off-state of the shutter lens. This alternative design also falls within the scope of the present invention.

As described above, the output result of the display screen 112 within the image driving period comprises part of the present image and part of the previous image. Therefore, in order to avoid trash images coming into user's eyes, in the present exemplary embodiment, the backlight module 114 is enabled to stay in the on-state ("ON") only within the image stabilization periods TH1, TH1', TH2, TH2', TH3, and TH3'. In other words, the backlight module 114 is disabled to stay in the off-state ("OFF") within the image driving periods TP1, TP1', TP2, TP2', TP3, and TP3'. Due to lack of backlight source needed, the display output of the display screen 112 within the image driving periods TP1, TP1', TP2, TP2', TP3, and TP3' will not be seen by user's eyes. Thus, though the first shutter lens 102 and the second shutter lens 104 are open (i.e., stay in the on-state) within image driving periods TP1 ', TP2', and TP3', they will not affect user's viewing of stereo images. However, the shutter-on period of the first shutter lens 102 /the second shutter lens 104 is increased, resulting in increased ambient brightness perceived by the user. Besides, since the shutter-on period of the first shutter lens 102/the second shutter lens 104 is increased, the shutter-off period of the first shutter lens 102 /the second shutter lens 104 is decreased accordingly, thereby reducing the power consumption of the pair of shutter glasses 100.

Please note that, in another exemplary embodiment, the backlight module 114 is enabled stay in the on-state within the image stabilization periods TH1, TH1', TH2, TH2', TH3, and TH3'; additionally, the backlight-on periods of the backlight module 114 may also slightly expand forward/backward from the start points of the image stabilization periods TH1, TH1', TH2, TH2', Th3, TH3', and/or slightly expand forward/backward from the end points of the image stabilization periods TH1, TH1', TH2, TH2', Th3, TH3'. In other words, the backlight module 114 is allowed to be switched from the off-state to the on-state before the start point of the image stabilization period, and/or to be switched from the on-state back to the off-state after the end point of the image stabilization period. That is, the backlight-on period of the backlight module 114 staying in the on-state may cover and extend beyond the image stabilization period. In brief, the backlight module 114 stays in the on-state within the image stabilization period, and stays in the off-state within the following image driving period; in addition, a length of a period during which the backlight module 114 stays in the off-state within the image driving period is shorter than or equal to a length of the image driving period.

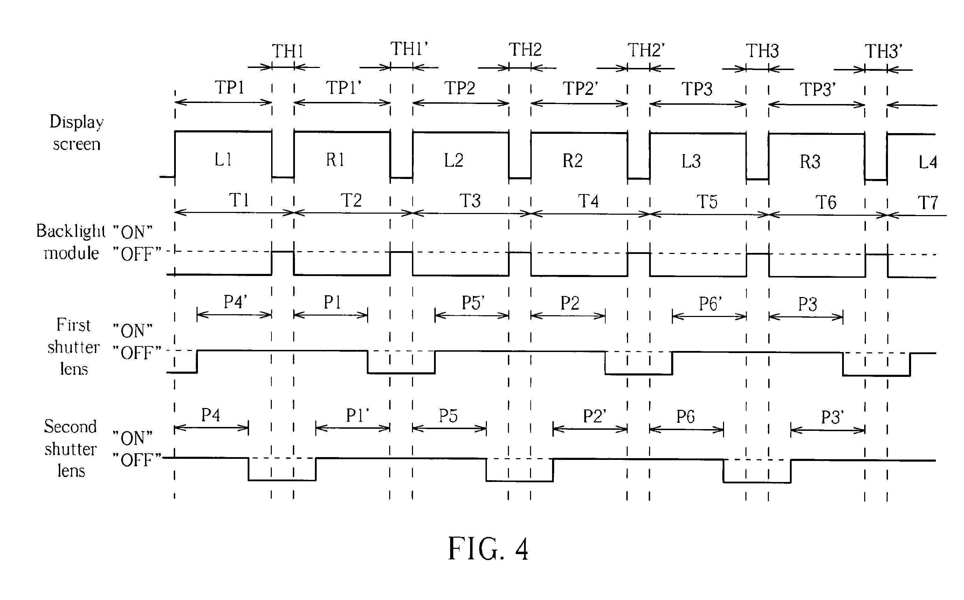

As shown in FIG. 2, the first shutter lens 102 is switched from the off-state to the on-state at the start points of the image stabilization periods TH1, TH2, and TH3 only, and the second shutter lens 104 is switched from the on-state to the off-state at the end points of the image stabilization periods TH1', TH2', and TH3' only. However, it is not meant to be a limitation to the present invention. Please refer to FIG. 4, which is a sequence diagram of the second control method employed for controlling the pair of shutter glasses shown in FIG. 1. In the present exemplary embodiment, the first shutter lens 102 is switched from the off-state to the on-state before the start points of the image stabilization periods TH1, Th2, and TH3, and the second shutter lens 104 is switched from the on-state to the off-state after the end points of the image stabilization periods TH1', Th2', and TH3'. In this way, besides the original first shutter-on periods of the first shutter lens P1 -P3 and the original second shutter-on periods of the second shutter lens P1 '-P3', there is one first shutter-on period (e.g., P4, P5 or P6) for the second shutter lens 104 that is between the end point of the image stabilization period corresponding to the specific second image and the time point at which the second shutter lens 104 is switched from the on-state to the off-state within the image driving period immediately following the specific first image; Besides, as to the other one of shutter lens, a second shutter-on period (e.g., P4', P5' or P6') is between the time point at which the first shutter lens 102 is switched from the off-state to the on-state within the image driving period corresponding to the specific first image and the end point of the image driving period corresponding to the specific first image. Please note that, besides the original first shutter-on period is partly overlapped with the original second shutter-on period (such as P1 is partly overlapped with P1', P2 is partly overlapped with P2', and P3 is partly overlapped with P3'), the newly added first shutter-on period is also partly overlapped with the newly added second shutter-on period (such as P4 is partly overlapped with P4', P5 is partly overlapped with P5', and P6 is partly overlapped with P6').

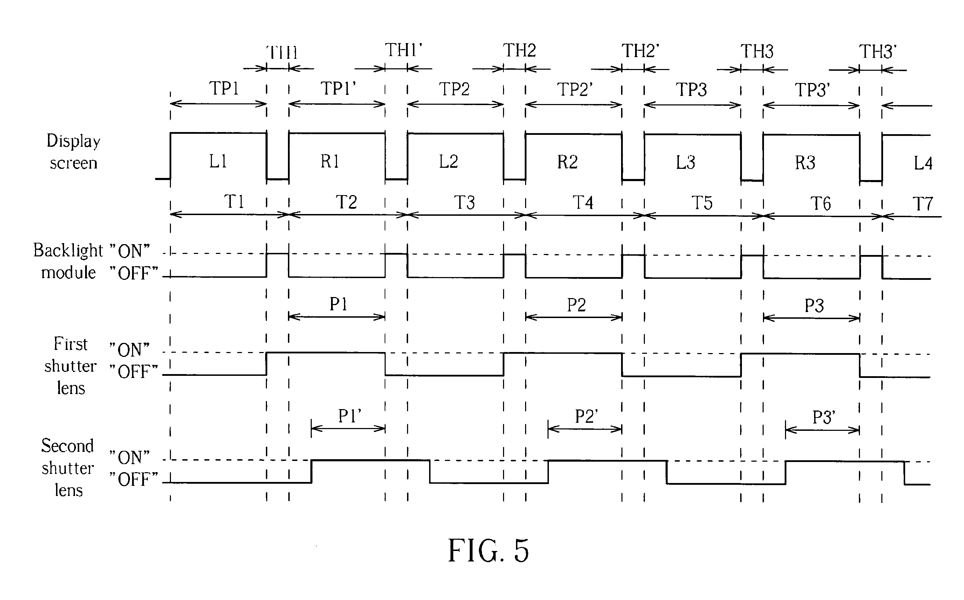

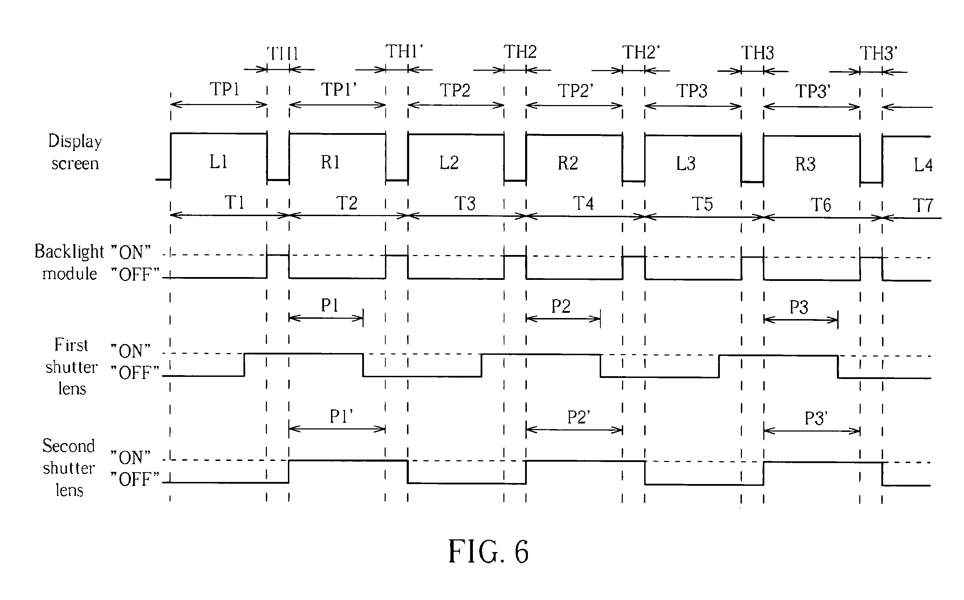

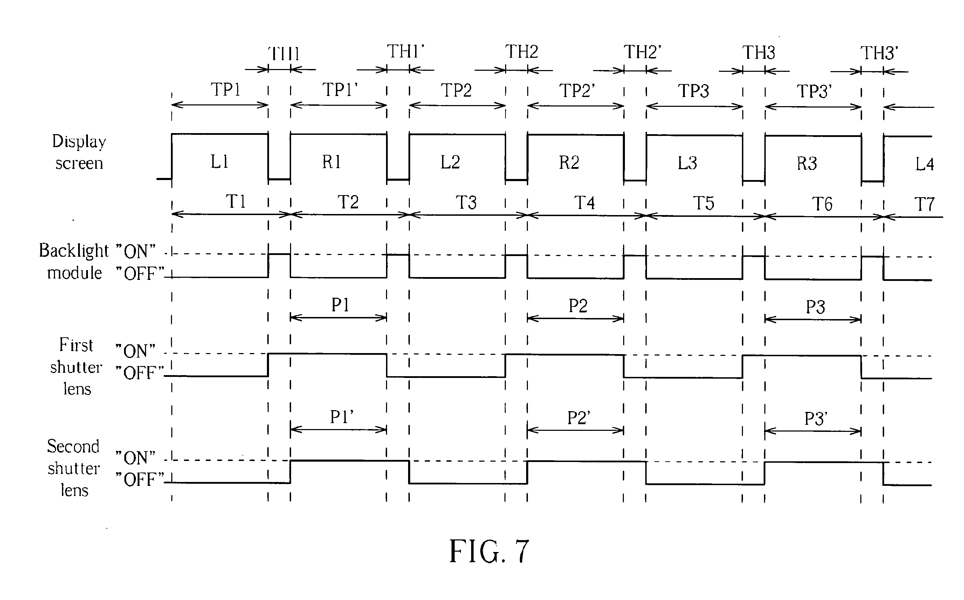

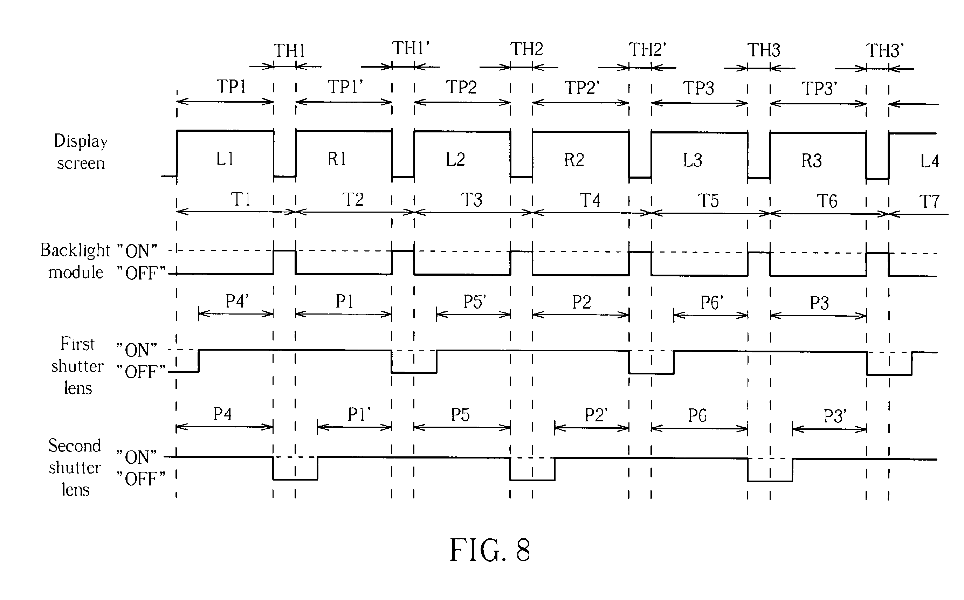

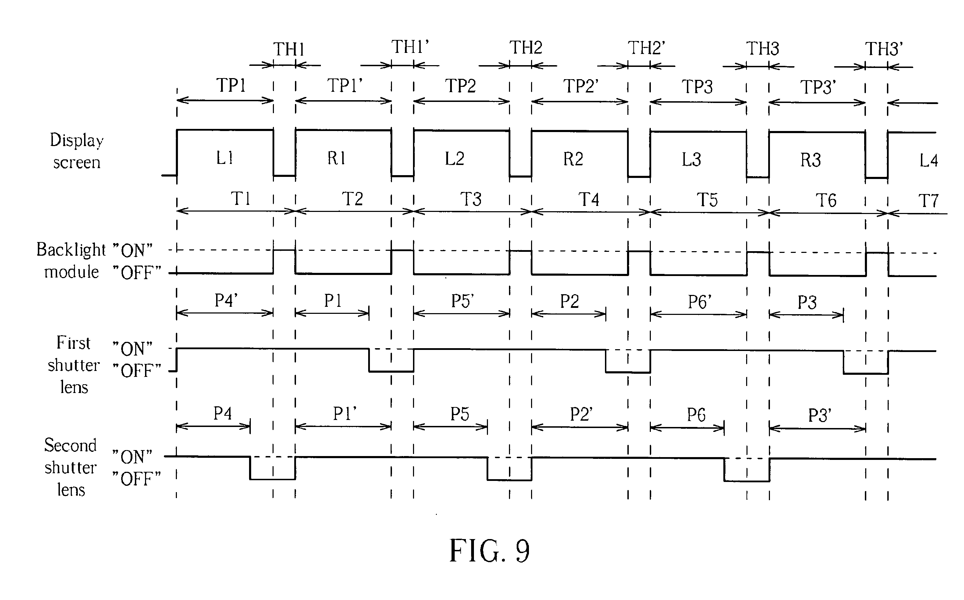

As described above, though the first shutter lens 102 and the second shutter lens 104 enter the on-state within the image driving periods TP1 ', TP2', and TP3', it does not, in fact, affect user's viewing of stereo images. However, the shutter-on period of the first shutter lens 102/the second shutter lens 104 is increased, resulting in increased ambient brightness perceived by the user. In other words, at the premise of not affecting user's viewing of stereo images, if the first shutter-on period and/or the second shutter-on period described above may be increased, then the ambient brightness perceived by the user may be further increased. Please refer to FIG. 5-10, which show the third control method to the eighth control method employed for controlling the pair of shutter glasses 100 shown in FIG. 1, respectively. In the exemplary embodiments of FIG. 5, FIG. 7, FIG. 8 and FIG. 10, the length of the first shutter-on period equals to the length of the image driving period corresponding to the second image. Besides, in the exemplary embodiments of FIG. 6, FIG. 7, FIG. 9 and FIG. 10, the length of the second shutter-on period equals to the length of the image driving period corresponding to the second image. Since those skilled in the art will readily understand functions and operations of the display screen 112, the backlight module 114, the first shutter lens 102 and the second shutter lens 104 shown in FIG. 5-FIG. 10, further description is omitted here for brevity.

In the exemplary embodiments described above, within the image stabilization periods such as TH1, TH1', TH2, TH2', TH3, and TH3', the user is allowed to view images mainly by enabling the backlight module 114, while in the aforementioned shutter-on periods such as P1, P1', P2, P2', P3, and P3', the liquid crystal cells in the liquid crystal layer of the first shutter lens 102/the second shutter lens 104 rotate before the image stabilization period in order make the first shutter lens 102/the second shutter lens 104 be switched from the off-state to the on-state, and rotate after the image stabilization period in order to make the first shutter lens 102/the second shutter lens 104 be switched from the on-state to the off-state. Therefore, when the user is viewing images within the image stabilization period, the present invention may further decrease the brightness attenuation resulted from the response time (i.e., the rotating process) of the liquid crystal cells.

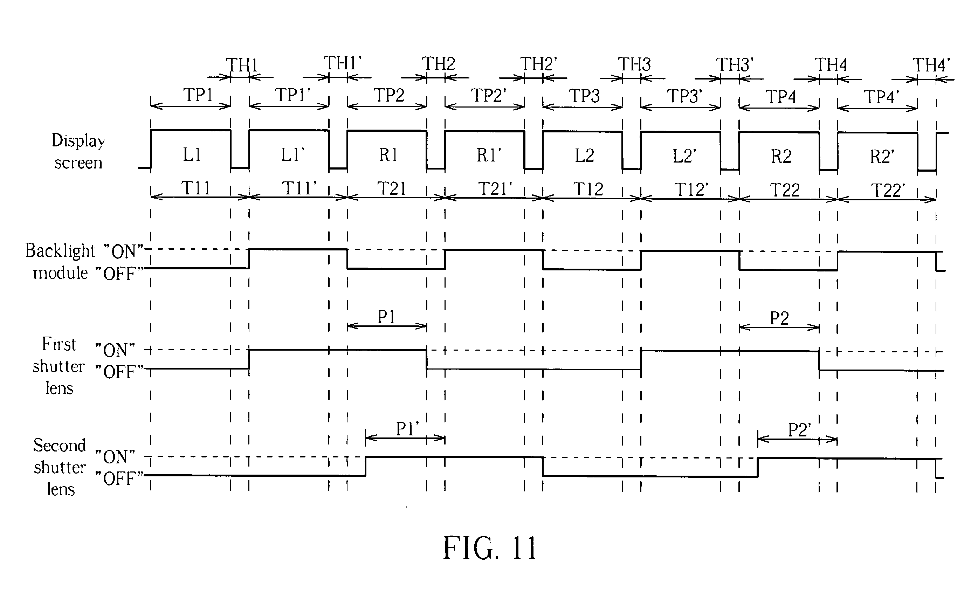

Please refer to FIG. 11, which is a sequence diagram of the ninth control method employed by the pair of shutter glasses shown in FIG. 1. In the present exemplary embodiment, the video output apparatus 110 is operated under a higher refresh rate (e.g., 200 Hz or 240 Hz). However, the video output apparatus 110 may be operated under an even higher refresh rate (e.g., 400 Hz or 480 Hz). As to the same primary image, there are more secondary images included in the display output when the video output apparatus 110 is operating under a higher refresh rate such as 480 Hz. However, no matter whether the video output apparatus 110 is operated under a refresh rate of 240 Hz or a higher refresh rate (e.g., 480 Hz), the control method of the pair of shutter glasses is basically the same. For clarity and brevity, the following paragraphs only provides a control method of pair of shutter glasses 100 applied to the video output apparatus is operated under a refresh rate of 240 Hz as an example. As shown in FIG. 11, the video output apparatus 110 displays a group of first images (e.g., (L1, L1') or (L2, L2')) and a group of second images (e.g., (R1, R1') or (R2, R2')), alternately. Besides, the video output apparatus 110 successively displays a primary first image (e.g., L1 or L2) and a secondary first image (e.g., L1' or L2') both included in the group of first images in order during a plurality of first image output periods (e.g., (T11, T11') or (T12, T12')), respectively, and successively displays a primary second image (e.g., R1 or R2) and a secondary second image (e.g., R1' or R2') both included in the group of second images in order during a plurality of second image output periods (e.g., (T21 , T21') or (T22, T22')), respectively. It should be noted that one of the group of first images and the group of second images is a group of left-eye images, and the other one of the group of first images and the group of second images is a group of right-eye images. In other words, in one exemplary embodiment, the first images L1, L1', L2, and L2' stand for left-eye images, and the second images R1, R1', R2, and R2' stand for right-eye images; however, in another exemplary embodiment, the first images L1, L1', L2, and L2' stand for right-eye images, and the second images R1, R1', R2, and R2' stand for left-eye images.

Analogously, when the video output apparatus 110 is operated under a higher refresh rate such as 480 Hz, the video output apparatus 110 will also display a group of first images and a group of second images, alternately. For example, in one exemplary embodiment, the display order of the images is: L1, L1', R1, R1', L2, L2', R2, and R2', wherein L1 and L2 are primary first images, L1' and L2' are secondary first images, R1 and R2 are primary second images, and R1' and R2' are secondary second images. Therefore, groups of first images are composed of (L1, L1') and (L2, L2'), respectively, and groups of second images are composed of (R1, R1') and (R2, R2'), respectively. However, in another exemplary embodiment, the display order of the images is: L1, L1', L1", L1'", R1, R1', R1", and R1"', wherein L1 is a primary first image, L1', L1" and L1'" are secondary first images, R1 is a primary second image, and R1', R1" and R1'" are secondary second images. Therefore, a group of first images is composed of (L1, L1', L1", L1'"), and a group of second images is composed of (R1, R1', R1", R1'"). Please note that, in an actual application, the backlight module 114 provides a brighter backlight to the secondary first images L1, L1', L1", and L1'" and the secondary second images R1, R1', R1", and R1'". However, this is for illustrative purposes only, and is not meant to be a limitation to the present invention. Besides, in a case where the video output apparatus 110 (e.g., a liquid crystal display, OLED display, plasma display or display/projector of other display techniques) is operated under a higher refresh rate such as 240 Hz or above, as to the same group of first/second images, the length of all secondary first/second images is longer than or equal to the length of the primary first/second images.

In one exemplary embodiment, the secondary first image is a primary first image in the same group of the first images that is displayed again, and the secondary second image is a primary second image in the same group of the second images that is displayed again. Each of the first image output periods and second image output periods comprises an image driving period and an image stabilization period (e.g., the first image output period T11 comprises an image driving period TP1 and an image stabilization period TH1, the image output period T11' comprises an image driving period TP1' and an image stabilization period TH1', and so on). As described above, as to the liquid crystal display, controlling the rotation of the liquid crystal cell is needed in order to reach the aim of controlling light transmission rate. Regarding the liquid crystal display operated under a lower refresh rate (e.g., 60 Hz or 120 Hz), the needed rotation time of liquid crystal cell is taken into consideration, and thus the image stabilization period immediately following the image driving period is mainly utilized for displaying stereo images. Regarding the liquid crystal display operated under a higher refresh rate (e.g., 240 Hz or 480 Hz), the length of each image stabilization period is shorter; however, in the same time period, the liquid crystal display will output more images under a higher image refresh rate. Therefore, the image output periods corresponding to the secondary images may be utilized for providing stabilized images and opening the first shutter lens 102/the second shutter lens 104 in order to provide stereo images for the user. In brief, each primary image (e.g., L1, L2, R1 or R2 described above) is responsible for updating the content of the displayed previous image (i.e., the content of the previous primary first image). Therefore, before the current primary image to be displayed has totally replaced the displayed previous image, the output result of the display screen 112 (e.g., an LCD panel) comprises part of the current primary image and part of the previous primary image within the image driving period corresponding to the primary image to be displayed. In addition, the following secondary images (e.g., L1', L2', R1', R2', L1'-L1'" or R1'-R1''') are responsible for stabilizing images in order to provide stereo images for the user through the pair of shutter glasses 100.

Besides, in another exemplary embodiment, the secondary first/second image itself is a continuous output result of the primary first/second image included in the same group of first/second images. That is, within the image driving period corresponding to the primary image, the display screen 112 successively sets pixels according to the display data, wherein pixels are driven line by line from the top to the bottom in an image and pixel by pixel from the left to the right in each line of the image to thereby output the primary image to be displayed. Alternatively , according to a different placement setting or hardware design of the liquid crystal panel, the display screen 112may output the primary image to be displayed by successively setting pixels according to the display date, wherein the pixels are driven line by line from the bottom to the top in an image and pixel by pixel from the right to the left in each line in the image, or may be driven according to other pixel updating order. However, within the image driving period corresponding to the following secondary image, the display screen 112 does not perform display driving operation according to any display data, so the display screen 112 still continuously displays the content of the primary image due to the inherent characteristic of the liquid crystal display panel. The same objective of stabilizing the image is achieved. Moreover, the secondary first/second image may also be a black image or an adjusted image that is generated by applying a fine-tuning adjustment, such as a compensation for the crosstalk of images, to the primary first/second image included in the same group of first/second images.

Besides, in yet another exemplary embodiment, the primary first/second image may be a black image, and the backlight module 114 stays in the on-state within the image output period corresponding to the secondary first/second image in order to provide stereo images for the user.

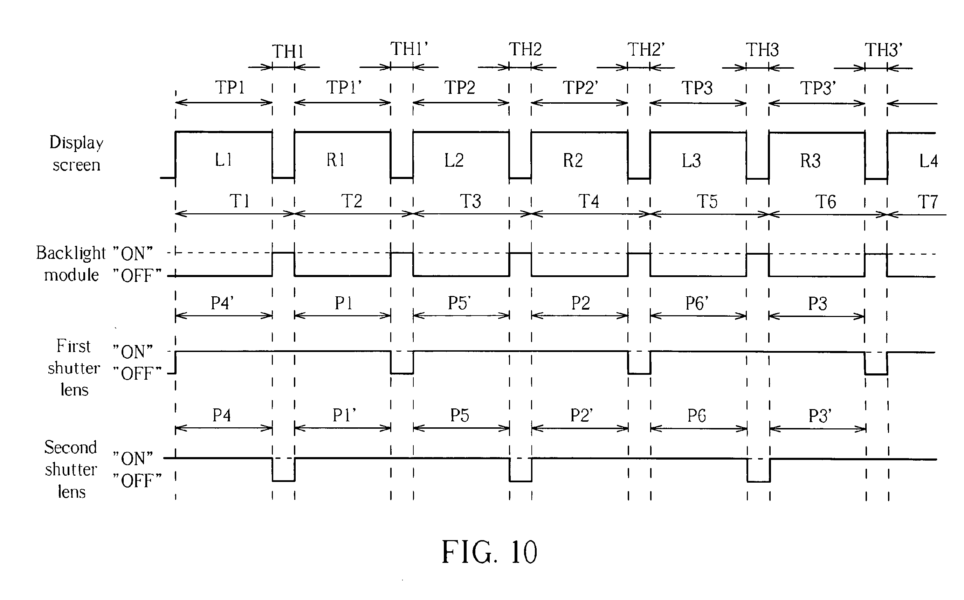

As described above, the control circuit 106 controls the first shutter lens 102 to be switched between an on-state ("ON") and an off-state ("OFF"), and controls the second shutter lens 104 to be switched between an on-state ("ON") and an off-state ("OFF"). In the present exemplary embodiment, the control circuit 106 controls the first shutter lens 102 to stay in the on-state within the first image output period (e.g., T11' or T12') corresponding to the specific secondary first image (e.g., L1' or L2'), and continuously stay in the on-state until the first shutter lens 102 is switched from the on-state to the off-state within the second image output period (e.g., T21 or T22) corresponding to the specific primary second image (e.g., R1 or R2) immediately following the specific secondary first image. As is shown in FIG. 10, in the present exemplary embodiment, the first shutter lens 102 is switched from the off-state to the on-state from the time point of the first image output period corresponding to the specific secondary first image, and is switched from the on-state to the off-state before the end point of the second image output period corresponding to the following specific primary second image. Additionally, the control circuit 106 further controls the second shutter lens 104 to be switched from the off-state to the on-state within the second image output period (e.g., T21 or T22) corresponding to the specific primary second image (e.g., R1 or R2), and continuously stay in the on-state to thereby remain in the on-state within the second image output period (e.g., T21' or T22') corresponding to the specific secondary second image (e.g., R1' or R2') immediately following the specific primary second image. As shown in FIG. 10, in the present exemplary embodiment, the second shutter lens 104 is switched from the off-state to the on-state from the time point of the second image output period corresponding to the specific primary second image, and is switched from the on-state to the off-state before the end point of the second image output period corresponding to the following specific secondary second image.

As shown in the figure, a first shutter-on period (e.g., P1 or P2) is between the end point of the first image output period corresponding to the specific secondary first image and the time point at which the first shutter lens 102 is switched from the on-state to the off-state within the second image output period corresponding to the specific primary second image. In addition, a second shutter-on period (e.g., P1' or P2') is between the time point at which the second shutter lens 104 is switched from the off-state to the on-state within the second image output period corresponding to the specific primary second image and the end point of the second image output period corresponding to the specific primary second image. Please note that the first shutter-on period is partly overlapped with the second shutter-on period. For example, P1 is partly overlapped with P1', and P2 is partly overlapped with P2'.

In other words, according to the operating sequence shown in FIG. 10, the control circuit 106 controls the first shutter lens 102 to stay in the on-state within a first image output period corresponding to a specific secondary first image, and controls the first shutter lens 102 and the second shutter lens 104 to simultaneously stay in the on-state only within a single continuous time period of a second image output period corresponding to a specific primary second image immediately following the specific secondary first image; besides, the control circuit 106 further controls a second shutter lens 104 to stay in the on-state within a second image output period corresponding to a specific secondary second image immediately following the specific primary second image.

Please note that FIG. 10 only shows that the control circuit 106 controls the first shutter lens 102 and the second shutter lens 104 during an operating time period including, for example, image output periods T11-T22'. In fact, the control circuit 106 will repeat the same control mechanism mentioned above for controlling the first shutter lens 102 and the second shutter lens 104 to be switched between the on-state to the off-state by referring the same glasses cycle (i.e., the cycle that the left eye and the right eye respectively view the image once) or different glasses cycles during the previous operating period(s) (e.g., the image output period preceding the image output period T11) and the following operating period(s) (e.g., the image output period next to the image output period T22').

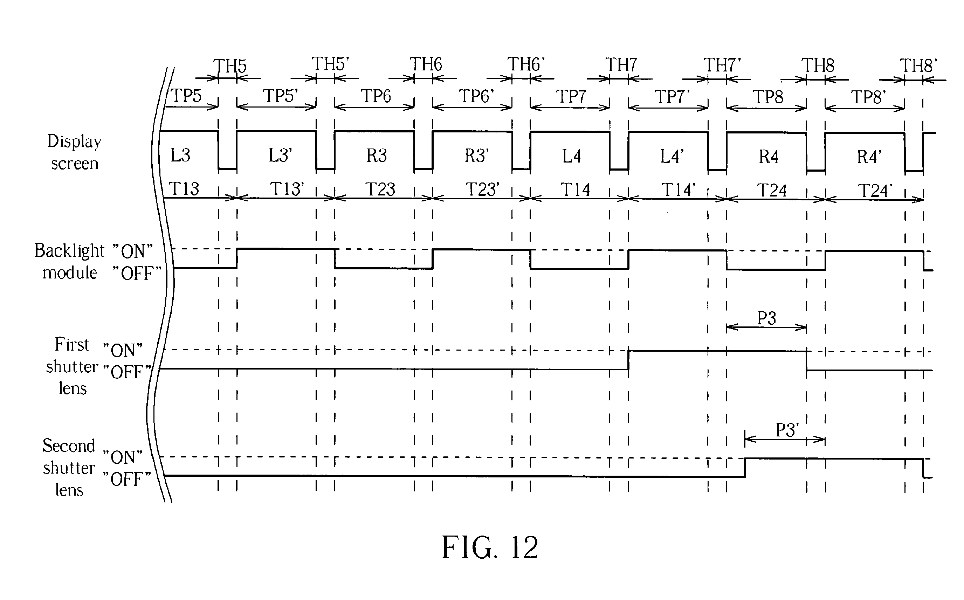

As to the operation with mixed glasses cycles, please refer to FIG. 11 in conjunction with FIG. 12. FIG. 12 is a continued sequence diagram of the operation in FIG. 11 based on the concept of using mixed different glasses cycles. As shown in FIG. 11, the original glasses cycle is equal to a sum of image output periods of four images (e.g., T11+T11'+T21+T21'). However, after the second image output period T21' ends, the original glasses cycle is expanded to a sum of image output periods of eight images (e.g., T12+T12'+T22+T22'+T13+T13'+T23+T23'). In the present exemplary embodiment, the first shutter lens 102 is switched from the off-state to the on-state at the start point of the following first image output period T14' corresponding to the secondary first image L4', and the second shutter lens 104 is switched from the off-state to the on-state within the second image output period T24 corresponding to the following primary second image R4. Please note that using a sum of image output periods of eight images as another glasses cycle is for illustrative purposes only, and is not meant to be a limitation to the present invention. In fact, the number of image output periods covered in one glasses cycle may be adjusted according to the actual application requirement/consideration. Besides, in the exemplary embodiment of mixed glasses cycles described above, the same control mechanism is repeated in another longer glasses cycle. However, in this longer glasses cycle, other control mechanism(s), such as other control mechanism(s) illustrated below, may be employed. Thus, within the time period (e.g., t13-t23') that the original control mechanism has no control over the on/off-state of the shutter lenses, other control mechanism(s) may be active to control the on/off-state of the shutter lenses. This alternative design also falls within the scope of the present invention.

As described above, before the present primary image to be displayed has totally replaced the displayed previous image, the output result, which is to be displayed within the image driving period corresponding to the present primary image, of the display screen 112 (e.g., an LCD panel) comprises part of the present primary image and part of the previous primary image. Thus, in order to avoid trash images reaching user's eyes, in the present exemplary embodiment, the backlight module 114 is enabled to stay in the on-state ("ON") only within the image output periods T11', T21', T12', and T22' respectively corresponding to the secondary first and second images. In other words, the backlight module 114 is disabled to stay in the off-state ("OFF") within the image output periods T11, T21 , T12, and T22 respectively corresponding to the primary first and second images. Therefore, due to lack of backlight source needed, the display output presented by the display screen 112 within image output periods T11, T21, T12, and T22 will not be seen by user's eyes. Therefore, though the first shutter lens 102 and the second shutter lens 104 are open (i.e., stay in the on-state) within the image output periods T21 and T22, they have no effect on user's viewing of stereo images. However, the length of the shutter-on period of the first shutter lens 102/the second shutter lens 104 is increased, resulting in increased ambient brightness perceived by the user. Moreover, since the length of the shutter-on period of the first shutter lens 102/the second shutter lens 104 has been increased, the length of the shutter-off period of the first shutter lens 102 and the second shutter lens 104 is decreased accordingly, thereby reducing the power consumption of the pair of shutter glasses 100.

Please note that, in another exemplary embodiment, the backlight module 114 is enabled to stay in the on-state within the image output periods T11', T21', T12', and T22' respectively corresponding to the secondary first and second images; additionally, the backlight-on periods of the backlight module 114 may also slightly expand forward/backward from the start points of the image output periods T11', T21', T12', T22' respectively corresponding to the secondary first and second images, and/or slight expand forward/backward from the end points of the image output periods T11', T21', T12', T22' respectively corresponding to the secondary first and second images. In other words, the backlight module 114 is allowed to be switched from the off-state to the on-state before the start point of the image output period corresponding to the secondary first image/the secondary second image, and/or to be switched from the on-state back to the off-state after the end point of the image output period corresponding to the secondary first image/secondary second image. That is, the backlight-on period of the backlight module 114 staying in the on-state may cover and extend beyond the image output period corresponding to the secondary first image/secondary second image, wherein the backlight module 114 stays in the on-state within the image output period corresponding to the secondary first image/secondary second image, and stays in the off-state within the image output period corresponding to the following primary first image/primary second image. A length of a time period in which the backlight module 114 stays in the off-state within the image output period corresponding to the following primary first image/primary second image is shorter than or equal to a length of the image output period corresponding to the following primary first image/primary second image.

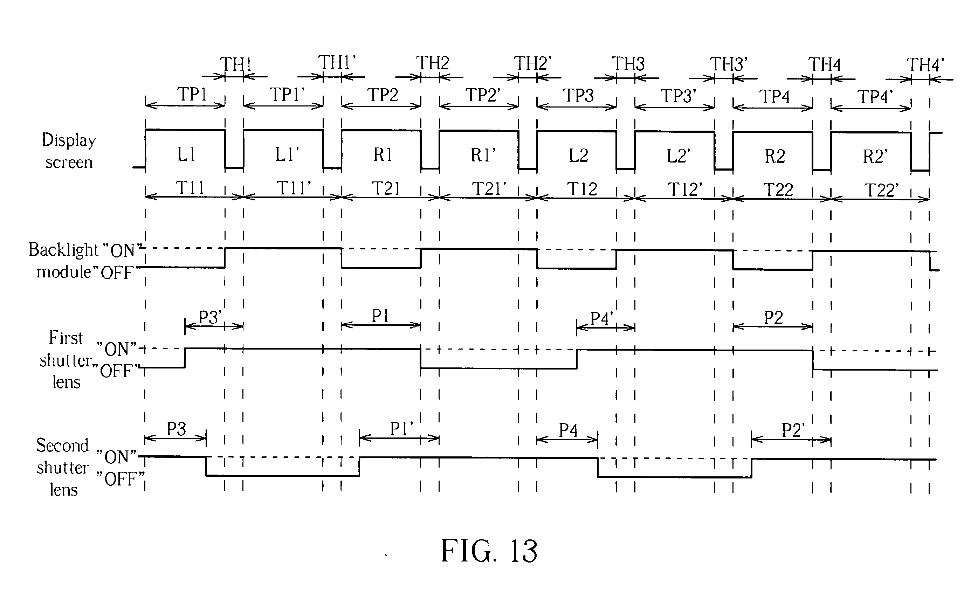

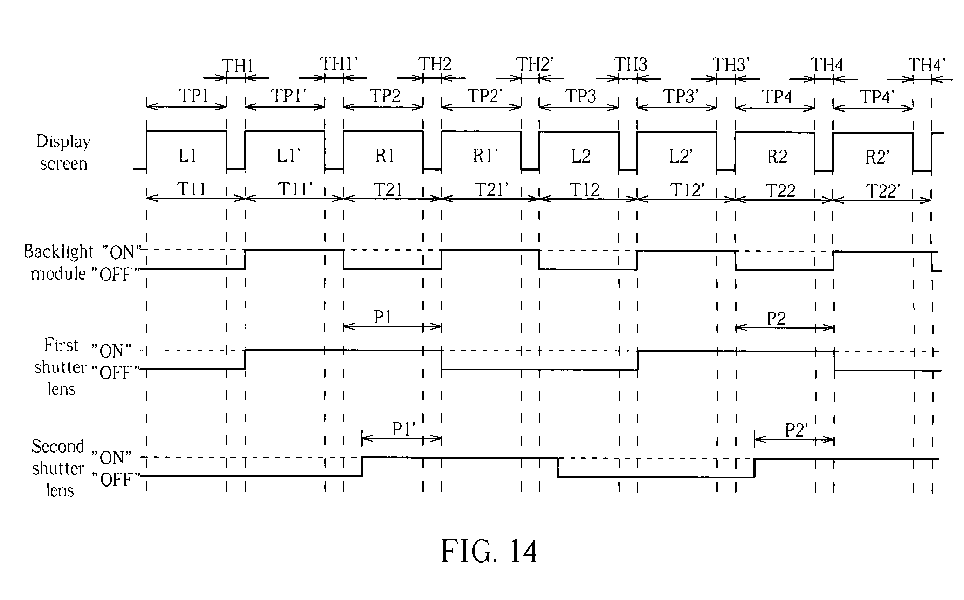

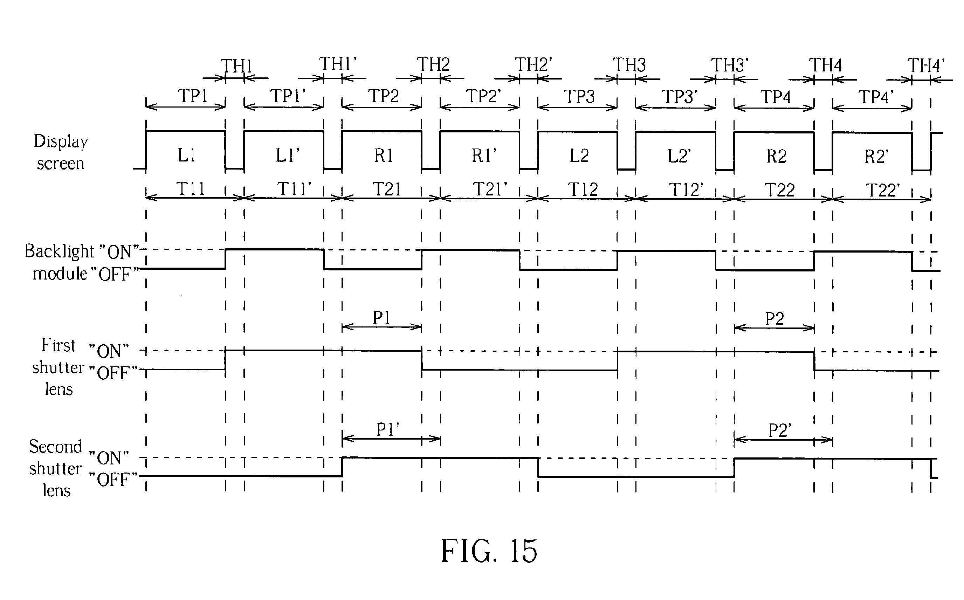

According to the aforementioned illustration of the shutter glasses control mechanism employed in a condition where the video output apparatus 110 is operated under a lower refresh rate (e.g., 60 Hz or 1 20 Hz), a variety of alternative designs, as shown in FIG.4-FIG. 10, are feasible. Similarly, as to the shutter glasses control mechanism employed in another condition where the video output apparatus 110 is operated under a higher refresh rate (e.g., 240 Hz or 480 Hz), other alternative designs are feasible, as shown in FIG. 13-FIG. 19 which are sequence diagrams of the tenth control method to the sixteenth control method employed in the pair of shutter glasses shown in FIG. 1. Since those skilled in the art will readily understand the operation of examples shown in FIG. 13-FIG. 19 by reading above paragraphs and referring to pertinent figures (such as FIG. 4-FIG. 10 and the related specification description), further description is omitted here for brevity.

Moreover, in order to maintain the same brightness user's left eye and right eye perceive, in the exemplary embodiment, the ratio of the shutter-on period in which the first shutter lens 102 stays in the on-state to the shutter-off period in which the first shutter lens 102 stays in the off-state equals to the ratio of the shutter-on period in which the second shutter lens 104 stays in the on-state to the shutter-off period in which the second shutter lens 104 stays in the off-state. In other words, in the process that each of the first shutter lens 102 and the second shutter lens 104 continuously is switched between the on-state and the off-state, a total length of shutter-on periods that the first shutter lens 102 stays in the on-state equals to a total length of shutter-on periods that the second shutter lens 104 stays in the on-state (on the other hand, a total length of shutter-off periods that the first shutter lens 102 stays in the off-state equals to a total length of shutter-off periods that the second shutter lens 104 stays in the off-state). Since the lengths of integral shutter-on/shutter-off periods that the first shutter lens 102 and the second shutter lens 104 stay in the on-state/off-state are the same, user's left eye and right eye would feel the same brightness. However, it is only utilized as an exemplary embodiment, and is not meant to be a limitation to the present invention. For example, under the condition where the length of an integral shutter-on/shutter-off period of the first shutter lens 102 is equal to the length of an integral shutter-on/shutter-off period of the second shutter lens 104, the number of shutter-on times and the number of shutter-off times of the first shutter lens 102 are not required to be equal to the number of shutter-on times and the number of shutter-off times of the second shutter lens 104, respectively.

Besides, switching on and switching off the first shutter lens 102 and the second shutter lens 104 will determine the brightness perceived by the user Therefore, under the premise of increasing the shutter-on periods of the pair of shutter glasses, the number of shutter-on times, the number of shutter-off times, the ratio of the shutter-on period to the shutter-off period and/or the glasses cycle (i.e., the cycle that the left eye and the right eye respectively view the image once) of the first shutter lens 102 and the second shutter lens 104 are adjustable, thereby achieving the objective of adjusting the ambient brightness perceived by the user.

Similarly, within the image output periods respectively corresponding to the secondary first images and secondary second images, the user is allowed to view images mainly by enabling the backlight module 114, while in the shutter-on periods described above (e.g., P1, P1', P2 and P2'), the liquid crystal cells in the liquid crystal layer of the first shutter lens 102/the second shutter lens 104 rotate before the image output period corresponding to the secondary first image/the secondary second image, in order to make the first shutter lens 102 /the second shutter lens 1 04 be switched from the off-state to the on-state, and rotate after the image output period corresponding to the secondary first image/the secondary second image, in order to make the first shutter lens 102/the second shutter lens 104 be switched from the on-state to the off-state. Therefore, when the user is viewing images within the image output periods respectively corresponding to the secondary first image and the secondary second image, the present invention may further decrease the brightness attenuation resulted from the response time period (i.e., the rotating process) of the liquid crystal cells.

Please note that, as to the video output apparatus 110 operated under a lower refresh rate (e.g., 120 Hz) in the exemplary embodiment described above, a glasses cycle (i.e., the cycle that the left eye and the right eye respectively view the image once) is mainly composed of image output periods of two images. As to the video output apparatus 110 operated under a higher refresh rate (e.g., 240 Hz) in the exemplary embodiment described above, a glasses cycle (i.e., the cycle that the left eye and the right eye respectively view the image once) is mainly composed of image output periods of four images. However, these are for illustrative purposes only, and are not meant to be limitations to the present invention. For example, regarding the video output apparatus 110 that is operated under a lower refresh rate (e.g., 120 Hz), a glasses cycle may also be composed of image output periods of four or six images. In addition, one of the several control methods described above or their combination may be employed to control pair of shutter glasses 100. The same objective of increasing the shutter-on periods of the pair of shutter glasses is achieved. In brief, the periodicity of the pair of shutter glasses 100 does not necessarily the same as the periodicity of image signals.

Moreover, in the present invention, the on-state and the off-state of the backlight module 114 are not limited to fully switching on the backlight module 114 to make the backlight module 114 have 100% brightness output and fully switching off the backlight module 114 to make the backlight module 114 have 0% brightness output, respectively. For example, when the brightness output of the backlight module 114 is higher than a certain value (such as 80% brightness output), the backlight module 114 may be regarded as entering the on-state; besides, when the brightness output of the backlight module 114 is lower than a certain value (such as 20% brightness output), the backlight module 114 may be regarded as entering the off-state. In brief, the on-state and the off-state of the backlight module 114 may be defined according to the actual design requirement/consideration.

## Claims

1. A method for controlling a video output apparatus (110) and a pair of shutter glasses (100) utilized for viewing stereo images presented by the video output apparatus (110), which respectively outputs a first image and a second image during a plurality of image output periods, alternately, one of the first image and the second image being a left-eye image, the other one of the first image and the second image being a right-eye image, each of the image output periods comprising an image driving period and an immediately following image stabilization period, the method **characterized by**:
controlling a first shutter lens (102, 104) of the pair of shutter glasses (100) to be switched between an on-state and an off-state, wherein the first shutter lens (102, 104) stays in the on-state within an image stabilization period (TH1) corresponding to a specific first image (L1), and continuously stays in the on-state until the first shutter lens (102, 104) is switched from the on-state to the off-state within an image driving period (TP1') corresponding to a specific second image (R1) immediately following the specific first image;
controlling a second shutter lens (102, 104) of the pair of shutter glasses (100) to be switched between the on-state and the off-state, wherein the second shutter lens (102 104) is switched from the off-state to the on-state within the image driving period (TP1') corresponding to the specific second image (R1), and continuously stays in the on-state to thereby remain in the on-state within an image stabilization period (TH1') corresponding to the specific second image; and
controlling a backlight module (114) of the video output apparatus (110) to stay in an on-state within the image stabilization period corresponding to the specific first image and the image stabilization period corresponding to the specific second image, and to stay in an off-state within the image driving period corresponding to the specific second image;
wherein one of the first shutter lens (102, 104) and the second shutter lens (102, 104) is utilized for viewing left-eye images, and the other one of the first shutter lens (102, 104) and the second shutter lens (102, 104) is utilized for viewing right-eye images; a first
shutter-on period (P1) is between an end point of the image stabilization period corresponding to the specific first image and a time point at which the first shutter lens (102, 104) is switched from the on-state to the off-state within the image driving period corresponding to the specific second image; a second shutter-on period (P1') is between a time point at which the second shutter lens (102, 104) is switched from the off-state to the on-state within the image driving period corresponding to the specific second image and an end point of the image driving period corresponding to the specific second image; the first shutter-on period is at least partly overlapped with the second shutter-on period, and a length of a time period during which the backlight module (114) stays in the off-state within the image driving period corresponding to the specific second image is equal to a length of the image driving period corresponding to the specific second image.

2. The method of claim 1, **characterized in that** the first shutter lens (102, 104) and the second shutter lens (102, 104) simultaneously stay in the on-state only within a single continuous time period of the image driving period corresponding to the specific second image.

3. A video output apparatus (110) and a pair of shutter glasses (100) utilized for viewing stereo images presented by the video output apparatus (110), the video output apparatus (110) respectively outputting a first image and a second image during a plurality of image output periods, alternately, one of the first image and the second image being a left-eye image, the other one of the first image and the second image being a right-eye image, each of the image output periods comprising an image driving period and an immediately following image stabilization period, the pair of shutter glasses (100) comprising:
a first shutter lens (102, 104);
a second shutter lens (102, 104), wherein one of the first shutter lens (102, 104) and the second shutter lens (102, 104) is utilized for viewing left-eye images, and the other one of the first shutter lens (102, 104) and the second shutter lens (102, 104) is utilized for viewing right-eye images; and
the video output apparatus (110 and the pair of shutter glasses (110) **characterized by**:
a backlight module (114) of the video output apparatus (110); and
a control circuit (106), electrically connected to the first shutter lens (102, 104) and the second shutter lens (102, 104), arranged for controlling the first shutter lens (102, 104) to be switched between an on-state and an off-state and controlling the second shutter lens (102, 104) to be switched between the on-state and the off-state; controlling the first shutter lens (102, 104) to stay in the on-state within an image stabilization period corresponding to a specific first image, and to continuously stay in the on-state until the first shutter lens (102, 104) is switched from the on-state to the off-state within an image driving period corresponding to a specific second image immediately following the specific first image; controlling the second shutter lens (102, 104) to be switched from the off-state to the on-state within the image driving period corresponding to the specific second image, and to continuously stay in the on-state to thereby remain in the on-state within an image stabilization period corresponding to the specific second image, and controlling the backlight module (114) to stay in an on-state within the image stabilization period corresponding to the specific first image and the image stabilization period corresponding to the specific second image, and to stay in an off-state within the image driving period corresponding to the specific second image;
wherein a first shutter-on period is between an end point of the image stabilization period corresponding to the specific first image and a time point at which the first shutter lens (102, 104) is switched from the on-state to the off-state within the image driving period corresponding to the specific second image; a second shutter-on period is between a time point at which the second shutter lens (102, 104) is switched from the off-state to the on-state within the image driving period corresponding to the specific second image and an end point of the image driving period corresponding to the specific second image; the first shutter-on period is at least partly overlapped with the second shutter-on period, and a length of a time period during which the backlight module (114) stays in the off-state within the image driving period corresponding to the specific second image is equal to a length of the image driving period corresponding to the specific second image.

4. The pair of shutter glasses (100) of claim 3, **characterized in that** the control circuit (106) controls the first shutter lens (102, 104) and the second shutter lens (102, 104) to simultaneously stay in the on-state only within a single continuous time period of the image driving period corresponding to the specific second image.

5. The pair of shutter glasses (100) of claim 3 or the method of claim 1, **characterized in that** a length of the first shutter-on period equals a length of the image driving period corresponding to the specific second image, and a length of the second shutter-on period equals a length of the image driving period corresponding to the specific second image.

6. A method for controlling a video output apparatus (110) and a pair of shutter glasses (100) utilized for viewing stereo images presented by the video output apparatus (110), the video output apparatus (110) outputting a group of first images and a group of second images, alternately, the video output apparatus (110) successively outputting a primary first image (L1) and the same image as at least a secondary first image (L1'), included in the group of first images in order, within a plurality of continuous first image output periods, respectively, the video output apparatus (110) successively outputting a primary second image (R1) and the same image as at least a secondary second image (R1'), included in the group of second images in order, within a plurality of continuous second image output periods, respectively, one of the group of first images and the group of second images being a group of left-eye images, the other one of the group of first images and the group of second images being a group of right-eye images, the method comprising:
controlling a first shutter lens (102, 104) of the pair of shutter glasses (100) to be switched between an on-state and an off-state, wherein the first shutter lens (102, 104) stays in the on-state within a first image output period (TP1') corresponding to a specific secondary first image, and continuously stays in the on-state until the first shutter lens (102, 104) is switched from the on-state to the off-state within a second image output period (TP2) corresponding to a specific primary second image immediately following the specific secondary first image;
controlling a second shutter lens (102, 104) of the pair of shutter glasses (100) to be switched between the on-state and the off-state, wherein the second shutter lens (102, 104) is switched from the off-state to the on-state within the second image output period (TP2) corresponding to the specific primary second image, and continuously stays in the on-state to thereby remain in the on-state within a second image output period (TP2') corresponding to a specific secondary second image immediately following the specific primary second image; and
controlling a backlight module (114) of the video output apparatus (110) to stay in an on-state within the first image output period corresponding to the specific secondary first image and the second image output period corresponding to the specific secondary second image, and to stay in an off-state within the second image output period (TP2) corresponding to the specific primary second image;
wherein one of the first shutter lens (102, 104) and the second shutter lens (102, 104) is utilized for viewing left-eye images, and the other one of the first shutter lens (102, 104) and the second shutter lens (102, 104) is utilized for viewing right-eye images; a first shutter-on period (P1) is between an end point of the first image output period corresponding to the specific secondary first image and a time point at which the first shutter lens (102, 104) is switched from the on-state to the off-state within the second image output period corresponding to the specific primary second image; a second shutter-on period (P1') between a time point at which the second shutter lens (102, 104) is switched from the off-state to the on-state within the second image output period corresponding to the specific primary second image and an end point of the second image output period corresponding to the specific primary second image; the first shutter-on period is at least partly overlapped with the second shutter-on period, and a length of a time period during which the backlight module (114) stays in the off-state within the second image output period corresponding to the specific primary second image is equal to a length of the second image output period corresponding to the specific primary second image.

7. The method of claim 6, **characterized in that** the first shutter lens (102, 104) and the second shutter lens (102, 104) simultaneously stay in the on-state only within a single continuous time period of the second image output period corresponding to the specific primary second image.

8. A video output apparatus (110) and a pair of shutter glasses (100) utilized for viewing stereo images presented by the video output apparatus (110), the video output apparatus (110) outputting a group of first images and a group of second images, alternately, the video output apparatus successively outputting a primary first image and the same image as at least a secondary first image, included in the group of first images in order, within a plurality of continuous first image output periods, respectively, the video output apparatus (110) successively outputting a primary second image and the same image as at least a secondary second image, included in the group of second images in order, within a plurality of continuous second image output periods, respectively, one of the group of first images and the group of second images being a group of left-eye images, the other one of the group of first images and the group of second images being a group of right-eye images, the pair of shutter glasses (100) comprising:
a first shutter lens (102, 104);
a second shutter lens (102, 104), wherein one of the first shutter lens (102, 104) and the second shutter lens (102, 104) is utilized for viewing left-eye images, and the other one of the first shutter lens (102, 104) and the second shutter lens (102, 104) is utilized for viewing right-eye images; and
the video output apparatus (110) and the pair of shutter glasses (100) **characterized by**:
a backlight module (114) of the video output apparatus (110); and
a control circuit (106), electrically connected to the first shutter lens (102, 104) and the second shutter lens (102, 104), arranged for controlling the first shutter lens (102, 104) to be switched between an on-state and an off-state and controlling the second shutter lens (102, 104) to be switched between the on-state and the off-state; controlling the first shutter lens (102, 104) to stay in the on-state within a first image output period corresponding to a specific secondary first image, and to continuously stay in the on-state until the first shutter lens (102, 104) is switched from the on-state to the off-state within a second image output period corresponding to a specific primary second image immediately following the specific secondary first image; controlling the second shutter lens (102, 104) to be switched from the off-state to the on-state within the second image output period corresponding to the specific primary second image, and to continuously stay in the on-state to thereby remain in the on-state within a second image output period immediately following the specific primary second image, and controlling the backlight module (114) to stay in an on-state within the first image output period corresponding to the specific secondary first image and the second image output period corresponding to the specific secondary second image, and to stay in an off-state within the second image output period corresponding to the specific primary second image;
wherein a first shutter-on period is between an end point of the first image output period corresponding to the specific secondary first image and a time point at which the first shutter lens (102, 104) is switched from the on-state to the off-state within the second image output period corresponding to the specific primary second image; a second shutter-on period is between a time point at which the second shutter lens (102, 104) is switched from the off-state to the on-state within the second image output period corresponding to the specific primary second image and an end point of the second image output period corresponding to the specific primary second image; the first shutter-on period is at least partly overlapped with the second shutter-on period, and a length of a time period during which the backlight module (114) stays in the off-state within the second image output period corresponding to the specific primary second image is equal to a length of the second image output period corresponding to the specific primary second image.

9. The pair of shutter glasses (100) of claim 8, **characterized in that** the control circuit (106) controls the first shutter lens (102, 104) and the second shutter lens (102, 104) to simultaneously stay in the on-state only within a single continuous time period of the second image output period corresponding to the specific primary second image.

10. The pair of shutter glasses (100) of claim 8 or the method of claim 6, **characterized in that** a sum of lengths of all secondary first images in the group of first images is larger than or equal to a length of the primary first image in the group of first images, and a sum of lengths of all secondary second images in the group of second images is larger than or equal to a length of the primary second image in the group of second images.

11. The pair of shutter glasses (100) of claim 8 or the method of claim 6, **characterized in that** a length of the first shutter-on period equals a length of the second image output period corresponding to the specific primary second image, and a length of the second shutter-on period equals a length of the second image output period corresponding to the specific primary second image.

## Patentansprüche

1. Verfahren zum Steuern eines Videoausgabegeräts (110) und einer Shutterbrille (100). die zum Ansehen von Stereobildern präsentiert von dem Videoausgabegerät (110) verwendet wird, das entsprechend ein erstes Bild und ein zweites Bild während mehrerer Bildausgabephasen abwechselnd ausgibt. wobei eines von dem ersten Bild und dem zweiten Bild ein Bild für das linke Auge ist und das andere Bild von dem ersten Bild und dem zweiten Bild ein Bild für das rechte Auge ist, wobei jede der Bildausgabephasen eine Bildautbauphase und unmittelbar darauf folgend eine Bildstabilisierungsphase umfasst. wobei das Verfahren **gekennzeichnet ist durch**:
Steuern einer ersten Shutterlinse (102. 104) der Shutterbrille (100), so dass sie zwischen einem eingeschalteten und einem ausgeschalteten Zustand wechselt, wobei die erste Shutterlinse (102, 104) während einer Bildstabilisierungsphase (TH1), die zu einem bestimmten ersten Bild (L1) gehört, in dem eingeschalteten Zustand ist und in dem eingeschalteten Zustand verbleibt, bis die erste Shutterlinse (102, 104) von dem eingeschalteten Zustand in den ausgeschalteten Zustand während einer Bildaufbauphase (TP1) wechselt, die zu einem bestimmten zweiten Bild (R1) gehört, das unmittelbar auf das bestimmte erste Bild folgt,
Steuern einer zweiten Shutterlinse (102. 104) der Shutterbrille (100), so dass sie zwischen einem eingeschalteten und einem ausgeschalteten Zustand wechselt, wobei die zweite Shutterlinse (102, 104) während einer Bildaufbauphase (TP1'), die zu dem bestimmten zweiten Bild (R1) gehört, von dem ausgeschalteten Zustand in den eingeschalteten Zustand wechselt und in dem eingeschalteten Zustand verbleibt, um somit während einer Bildstabilisierungsphase (TH1'). die zu dem bestimmten zweiten Bild (R1) gehört, in dem eingeschalteten Zustand zu verbleiben, und
Steuern eines Rücklichtmoduls (114) auf dem Videoausgabegerät (110), um während der Bildstabilisierungsphase, die zu dem bestimmten ersten Bild gehört, und der Vildstabilisierungsphase, die zu dem bestimmten zweiten Bild gehört, in einem eingeschalteten Zustand zu sein, und um während der Bildaufbauphase, die zu dem bestimmten zweiten Bild gehört, in einem ausgeschalteten Zustand zu sein,
wobei eine der ersten Shutterlinse (102, 104) und der zweiten Shutterlinse (102. 104) zum Betrachten von Bildern für das linke Auge verwendet wird, und die andere der ersten Shutterlinse (102, 104) und der zweiten Shutterlinse (102, 104) zum Betrachten von Bildern für das rechte Auge verwendet wird; wobei eine erste Shutter-an Phase (P1) zwischen einem Endpunkt der Bildstabilisierungsphase, die zu dem bestimmten ersten Bild gehört, und einem Zeitpunkt liegt, zu dem die erste Shutterlinse (102, 104) während der Bildaufbauphase, die zu dem bestimmten zweiten Bild gehört, von dem eingeschalteten Zustand in den ausgeschalteten Zustand wechselt; wobei eine zweite Shutter-an Phase (P1') zwischen einem Zeitpunkt, zu dem die zweite Shutterlinse (102. 104) von dem ausgeschalteten Zustand in den eingeschalteten Zustand während einer Bildautbauphase wechselt, die zu dem bestimmten zweiten Bild gehört, und einem Endpunkt der Bildautbauphase liegt, die zu dem bestimmten zweiten Bild gehört; wobei die erste Shutter-an Phase zumindest teilweise mit der zweiten Shutter-an Phase überlappt, und wobei eine Dauer einer Zeitphase während der das Rücklichtmodul (114) in dem ausgeschalteten Zustand innerhalb der Bildaufbauphase verbleibt, die zu dem bestimmten zweiten Bild gehört, gleich einer Dauer der Bildaufbauphase ist, die zu dem bestimmten zweiten Bild gehört.

2. Verfahren nach Anspruch 1, **dadurch gekennzeichnet. dass** die erste Shutterlinse (102, 104) und die zweite Shutterlinse (102, 104) gleichzeitig nur während einer einzigen kontinuierlichen Zeitphase der Bildaufbauphase in dem eingeschalteten Zustand verbleiben, die zu dem bestimmten zweiten Bild gehört.

3. Videoausgabegerät (110) und eine Shutterbrille (100), die zum Ansehen von Stereobildern präsentiert von dem Videoausgabegerät (110) verwendet wird, wobei das Videoausgabegerät (110) entsprechend ein erstes Bild und ein zweites Bild während mehrerer Bildausgabephasen abwechselnd ausgibt, wobei eines von dem ersten Bild und dem zweiten Bild ein Bild für das linke Auge ist und das andere Bild von dem ersten Bild und dem zweiten Bild ein Bild für das rechte Auge ist, wobei jede der Bildausgabephasen eine Bildaufbauphase und unmittelbar darauf folgend eine Bildstabilisierungsphase umfasst, wobei die Shutterbrille (100) umfasst:
Eine erste Shutterlinse (102, 104),
eine zweite Shutterlinse (102, 104). wobei eine der ersten Shutterlinse (102. 104) und der zweiten Shutterlinse (102, 104) zum Betrachten von Bildern für das linke Auge verwendet wird, und die andere der ersten Shutterlinse (102, 104) und der zweiten Shutterlinse (102, 104) zum Betrachten von Bildern für das rechte Auge verwendet wird, und
das Videoausgabegerät (110) und die Shutterbrille (100) sind **gekennzeichnet durch**:
Ein Rücklichtmodul (114) auf dem Videoausgabegerät (110), und
eine Steuerschaltung (106), die mit der ersten Shutterlinse (102, 104) und der zweiten Shutterlinse (102, 104) elektrisch verbunden ist und angepasst ist, die erste Shutterlinse (102, 104) so zu steuern, dass sie zwischen einem eingeschalteten und einem ausgeschalteten Zustand wechselt, und die zweite Shutterlinse (102, 104) so zu steuern, dass sie zwischen einem eingeschalteten und einem ausgeschalteten Zustand wechselt; zum Steuern der ersten Shutterlinse (102, 104), so dass sie während einer Bildstabilisierungsphase, die zu einem bestimmten ersten Bild gehört, in dem eingeschalteten Zustand ist und in dem eingeschalteten Zustand verbleibt, bis die erste Shutterlinse (102, 104) von dem eingeschalteten Zustand in den ausgeschalteten Zustand während einer Bildaufbauphase wechselt. die zu einem bestimmten zweiten Bild gehört, das unmittelbar auf das bestimmte erste Bild folgt; zum Steuern der zweiten Shutterlinse (102, 104), so dass sie von dem ausgeschalteten Zustand in den eingeschalteten Zustand während einer Bildaufbauphase, die zu dem bestimmten zweiten Bild gehört, wechselt, und in dem eingeschalteten Zustand verbleibt, um somit während einer Bildstabilisierungsphase, die zu dem bestimmten zweiten Bild (R1) gehört, in dem eingeschalteten Zustand zu verbleiben: und zum Steuern des Rücklichtmodul (114), um während der Bildstabilisierungsphase, die zu dem bestimmten ersten Bild gehört, und der Bildstabilisierungsphase, die zu dem bestimmten zweiten Bild gehört, in einem eingeschalteten Zustand zu sein, und um während der Bildautbauphase, die zu dem bestimmten zweiten Bild gehört, in einem ausgeschalteten Zustand zu sein,
wobei eine erste Shutter-an Phase zwischen einem Endpunkt der Bildstabilisierungsphase, die zu dem bestimmten ersten Bild gehört, und einem Zeitpunkt liegt, zu dem die erste Shutterlinse (102, 104) während der Bildaufbauphase, die zu dem bestimmten zweiten Bild gehört, von dem eingeschalteten Zustand in den ausgeschalteten Zustand wechselt; wobei eine zweite Shutter-an Phase zwischen einem Zeitpunkt, zu dem die zweite Shutterlinse (102, 104) von dem ausgeschalteten Zustand in den eingeschalteten Zustand während einer Bildautbauphase wechselt, die zu dem bestimmten zweiten Bild gehört, und einem Endpunkt der Bildautbauphase liegt, die zu dem bestimmten zweiten Bild gehört; wobei die erste Shutter-an Phase zumindest teilweise mit der zweiten Shutter-an Phase überlappt, und wobei eine Dauer einer Zeitphase während der das Rücklichtmodul (114) in dem ausgeschalteten Zustand innerhalb der Bildaufbauphase verbleibt, die zu dem bestimmten zweiten Bild gehört, gleich einer Dauer der Bildautbauphase ist, die zu dem bestimmten zweiten Bild gehört.

4. Shutterbrille (100) nach Anspruch 3, **dadurch gekennzeichnet, dass** die Steuerschaltung (106) die erste Shutterlinse (102, 104) und die zweite Shutterlinse (102, 104) steuer, gleichzeitig nur während einer einzigen kontinuierlichen Zeitphase der Bildaufbauphase in dem eingeschalteten Zustand zu verbleiben, die zu dem bestimmten zweiten Bild gehört.

5. Shutterbrille (100) nach Anspruch 3 oder Verfahren nach Anspruch 1, **dadurch gekennzeichnet, dass** eine Dauer der ersten Shutter-an Phase gleich einer Dauer der Bildaufbauphase ist, die zu dem bestimmten zweiten Bild gehört, und eine Dauer der zweiten Shutter-an Phase gleich einer Dauer der Bildaufbauphase ist, die zu dem bestimmten zweiten Bild gehört.

6. Verfahren zum Steuern eines Videoausgabegeräts (110) und einer Shutterbrille (100) die zum Ansehen von Stereobildern präsentiert von dem Videoausgabegerät (110) verwendet wird, wobei das Videoausgabegerät (110) eine Gruppe erster Bilder und eine Gruppe zweiter Bilder alternierend ausgibt, wobei das Videoausgabegerät (110) nacheinander ein primäres erstes Bild (L1) und dasselbe Bild als wenigstens ein sekundäres erstes Bild (L1') ausgibt, die in einer Reihenfolge der Gruppe der ersten Bilder zugeordnet sind, innerhalb mehrerer kontinuierlicher Phasen der ersten Bildausgabe, wobei das Videoausgabegerät (110) nacheinander ein primäres zweites Bild (R1) und dasselbe Bild als wenigstens ein sekundäres zweites Bild (R1') ausgibt, die in einer Reihenfolge der Gruppe der zweiten Bilder zugeordnet sind, innerhalb mehrerer kontinuierlicher Phasen der zweiten Bildausgabe, wobei eine der Gruppen der Gruppe erster Bilder und der Gruppe zweiter Bilder eine Gruppe von Bildern für das linke Auge ist und die andere der Gruppen der Gruppe erster Bilder und der Gruppe zweiter Bilder eine Gruppe von Bildern für das rechte Auge ist, wobei das Verfahren umfasst:
Steuern einer ersten Shutterlinse (102, 104) der Shutterbrille (100), so dass sie zwischen einem eingeschalteten und einem ausgeschalteten Zustand wechselt, wobei die erste Shutterlinse (102, 104) während einer ersten Bildausgabephase (TP1'), die zu einem bestimmten sekundären ersten Bild gehört, in dem eingeschalteten Zustand verbleibt und in dem eingeschalteten Zustand verbleibt, bis die erste Shutterlinse (102, 104) während einer zweiten Bildausgabephase (TP2), die zu einem bestimmten primären zweiten Bild gehört, das unmittelbar auf das bestimmte sekundäre erste Bild folgt, von dem eingeschalteten Zustand in den ausgeschalteten Zustand wechselt,
Steuern einer zweiten Shutterlinse (102, 104) der Shutterbrille (100), so dass sie zwischen einem eingeschalteten und einem ausgeschalteten Zustand wechselt, wobei die zweite Shutterlinse (102, 104) während der zweiten Bildausgabephase (TP2), die zu dem bestimmten primären zweiten Bild gehört, von dem ausgeschalteten Zustand in den eingeschalteten Zustand wechselt und in dem eingeschalteten Zustand verbleibt, um somit während einer zweiten Bildausgabephase (TP2'). die zu einem bestimmten sekundären zweiten Bild gehört, das unmittelbar auf das bestimmte primäre zweite Bild folgt, in dem eingeschalteten Zustand zu verbleiben, und
Steuern eines Rücklichtmoduls (114) auf dem Videoausgabegerät (110), um während der ersten Bildausgabephase, die zu dem bestimmten sekundären ersten Bild gehört, und der zweiten Bildausgabephase, die zu dem bestimmten sekundären zweiten Bild gehört, in einem eingeschalteten Zustand zu sein, und um während der zweiten Bildausgabephase (TP2). die zu dem bestimmten primären zweiten Bild gehört, in einem ausgeschalteten Zustand zu sein.
wobei eine der ersten Shutterlinse (102, 104) und der zweiten Shutterlinse (102, 104) zum Betrachten von Bildern für das linke Auge verwendet wird, und die andere der ersten Shutterlinse (102, 104) und der zweiten Shutterlinse (102, 104) zum Betrachten von Bildern für das rechte Auge verwendet wird; wobei eine erste Shutter-an Phase (PI) zwischen einem Endpunkt der ersten Bildausgabephase, die zu dem bestimmten sekundären ersten Bild gehört, und einem Zeitpunkt liegt, zu dem die erste Shutterlinse (102, 104) während der zweiten Bildausgabephase, die zu dem bestimmten primären zweiten Bild gehört, von dem eingeschalteten Zustand in den ausgeschalteten Zustand wechselt; wobei eine zweite Shutter-an Phase (P1') zwischen einem Zeitpunkt, zu dem die zweite Shutterlinse (102, 104) von dem ausgeschalteten Zustand in den eingeschalteten Zustand während der zweiten Bildausgabephase wechselt, die zu dem bestimmten primären zweiten Bild gehört, und einem Endpunkt der zweiten Bildausgabephase liegt, die zu dem bestimmten primären zweiten Bild gehört; wobei die erste Shutter-an Phase zumindest teilweise mit der zweiten Shutter-an Phase überlappt, und wobei eine Dauer einer Zeitphase während der das Rücklichtmodul (114) in dem ausgeschalteten Zustand innerhalb der zweiten Bildausgabephase verbleibt, die zu dem bestimmten primären zweiten Bild gehört, gleich einer Dauer der zweiten Bildausgabephase ist, die zu dem bestimmten primären zweiten Bild gehört.

7. Verfahren nach Anspruch 6, **dadurch gekennzeichnet, dass** die erste Shutterlinse (102, 104) und die zweite Shutterlinse (102, 104) gleichzeitig nur während einer einzigen kontinuierlichen Zeitphase der zweiten Bildausgabephase in dem eingeschalteten Zustand verbleiben, die zu dem bestimmten primären zweiten Bild gehört.

8. Videoausgabegerät (110) und eine Shutterbrille (100), die zum Ansehen von Stereobildern präsentiert von dem Videoausgabegerät (110) verwendet wird, wobei das Videoausgabegerät (110) eine Gruppe erster Bilder und eine Gruppe zweiter Bilder alternierend ausgibt, wobei das Videoausgabegerät (110) nacheinander ein primäres erstes Bild und dasselbe Bild als wenigstens ein sekundäres erstes Bild ausgibt, die in einer Reihenfolge der Gruppe der ersten Bilder zugeordnet sind, innerhalb mehrerer kontinuierlicher Phasen der Ausgabe erster Bilder, wobei das Videoausgabegerät (110) nacheinander ein primäres zweites Bild und dasselbe Bild als wenigstens ein sekundäres zweites Bild ausgibt, die in einer Reihenfolge der Gruppe der zweiten Bilder zugeordnet sind, innerhalb mehrerer kontinuierlicher Phasen der Ausgabe zweiter Bilder, wobei eine der Gruppen der Gruppe erster Bilder und der Gruppe zweiter Bilder eine Gruppe von Bildern für das linke Auge ist und die andere der Gruppen der Gruppe erster Bilder und der Gruppe zweiter Bilder eine Gruppe von Bildern für das rechte Auge ist, wobei die Shutterbrille (100) umfasst:
Eine erste Shutterlinse (102, 104),
eine zweite Shutterlinse (102, 104), wobei eine der ersten Shutterlinse (102, 104) und der zweiten Shutterlinse (102, 104) zum Betrachten von Bildern für das linke Auge verwendet wird, und die andere der ersten Shutterlinse (102, 104) und der zweiten Shutterlinse (102, 104) zum Betrachten von Bildern für das rechte Auge verwendet wird, und
das Videoausgabegerät (110) und die Shutterbrille (100) sind **gekennzeichnet durch**:
Ein Rücklichtmodul (114) auf dem Videoausgabegerät (110), und
eine Steuerschaltung (106), die mit der ersten Shutterlinse (102, 104) und der zweiten Shutterlinse (102, 104) elektrisch verbunden ist und angepasst ist, die erste Shutterlinse (102, 104) so zu steuern, dass sie zwischen einem eingeschalteten und einem ausgeschalteten Zustand wechselt, und die zweite Shutterlinse (102, 104) so zu steuern, dass sie zwischen einem eingeschalteten und einem ausgeschalteten Zustand wechselt; zum Steuern der ersten Shutterlinse (102, 104), so dass sie während einer ersten Bildausgabephase, die zu einem bestimmten sekundären ersten Bild gehört, in dem eingeschalteten Zustand ist und in dem eingeschalteten Zustand verbleibt, bis die erste Shutterlinse (102, 104) von dem eingeschalteten Zustand in den ausgeschalteten Zustand während einer zweiten Bildausgabephase wechselt, die zu einem bestimmten primären zweiten Bild gehört, das unmittelbar auf das bestimmte sekundäre erste Bild folgt; zum Steuern der zweiten Shutterlinse (102, 104), so dass sie von dem ausgeschalteten Zustand in den eingeschalteten Zustand während der zweiten Bildausgabephase, die zu dem bestimmten primären zweiten Bild gehört, wechselt, und in dem eingeschalteten Zustand verbleibt, um somit während einer zweiten Bildausgabephase, die unmittelbar auf das bestimmte primäre zweite Bild folgt, in dem eingeschalteten Zustand zu verbleiben, und zum Steuern des Rücklichtmoduls (114), um während der ersten Bildausgabephase, die zu dem bestimmten sekundären ersten Bild gehört, und der zweiten Bildausgabephase, die zu dem bestimmten sekundären zweiten Bild gehört, in einem eingeschalteten Zustand zu sein, und um während der zweiten Bildausgabephase, die zu dem bestimmten primären zweiten Bild gehört, in einem ausgeschalteten Zustand zu sein,
wobei eine erste Shutter-an Phase zwischen einem Endpunkt der Bildausgabephase, die zu dem bestimmten sekundären ersten Bild gehört, und einem Zeitpunkt liegt, zu dem die erste Shutterlinse (102, 104) während der zweiten Bildausgabephase, die zu dem bestimmten primären zweiten Bild gehört, von dem eingeschalteten Zustand in den ausgeschalteten Zustand wechselt; wobei eine zweite Shutter-an Phase zwischen einem Zeitpunkt, zu dem die zweite Shutterlinse (102, 104) von dem ausgeschalteten Zustand in den eingeschalteten Zustand während der zweiten Bildausgabephase wechselt, die zu dem bestimmten primären zweiten Bild gehört, und einem Endpunkt der zweiten Bildausgabephase liegt, die zu dem bestimmten primären zweiten Bild gehört; wobei die erste Shutter-an Phase zumindest teilweise mit der zweiten Shutter-an Phase überlappt und eine Dauer einer Zeitphase während der das Rücklichtmodul (114) in dem ausgeschalteten Zustand innerhalb der zweiten Bildausgabephase verbleibt, die zu dem bestimmten primären zweiten Bild gehört, gleich einer Dauer der zweiten Bildausgabephase ist, die zu dem bestimmten primären zweiten Bild gehört.

9. Shutterbrille (100) nach Anspruch 8, **dadurch gekennzeichnet, dass** die Steuerschaltung (106) die erste Shutterlinse (102, 104) und die zweite Shutterlinse (102, 104) steuert, gleichzeitig nur während einer einzigen kontinuierlichen Zeitphase der zweiten Bildausgabephase in dem eingeschalteten Zustand zu verbleiben, die zu dem bestimmten primären zweiten Bild gehört.

10. Shutterbrille (100) nach Anspruch 8 oder Verfahren nach Anspruch 6, **dadurch gekennzeichnet, dass** die Summe der Längen aller sekundärer ersten Bilder in der Gruppe der ersten Bilder größer oder gleich zu der Länge der primären ersten Bilder in der Gruppe der ersten Bilder ist, und eine Summe der Längen aller sekundärer zweiten Bilder in der Gruppe der zweiten Bilder größer oder gleich einer Länge der primären zweiten Bilder in der Gruppe der zweiten Bilder ist.

11. Shutterbrille (100) nach Anspruch 8 oder Verfahren nach Anspruch 6, **dadurch gekennzeichnet, dass** eine Dauer der ersten Shutter-an Phase gleich einer Dauer der zweiten Bildausgabephase ist, die zu dem bestimmten primären zweiten Bild gehört, und eine Dauer der zweiten Shutter-an Phase gleich einer Dauer der zweiten Bildausgabephase ist, die zu dem bestimmten primären zweiten Bild gehört.

## Revendications

1. Procédé de commande d'un appareil de sortie vidéo (110) et d'une paire de lunettes à obturateur (100) utilisée pour visualiser des images stéréoscopiques présentées par l'appareil de sortie vidéo (110), qui produit respectivement une première image et une seconde image durant une pluralité de périodes de sortie d'image, en alternance, une parmi la première image et la seconde image étant une image d'oeil gauche, l'autre parmi la première image et la seconde image étant une image d'oeil droit, chacune des périodes de sortie d'image comprenant une période de transmission d'image et une période de stabilisation d'image suivant immédiatement, le procédé **caractérisé par** :
la commande d'une première lentille à obturateur (102, 104) de la paire de lunettes à obturateur (100) pour sa commutation entre un état activé et un état désactivé, dans lequel la première lentille à obturateur (102, 104) reste dans l'état activé pendant une période de stabilisation d'image (TH1) correspondant à une première image spécifique (L1), et reste en continu dans l'état activé jusqu'à ce que la première lentille à obturateur (102, 104) soit commutée de l'état activé à l'état désactivé pendant une période de transmission d'image (TP1') correspondant à une seconde image spécifique (R1) suivant immédiatement la première image spécifique ;
la commande d'une seconde lentille à obturateur (102, 104) de la paire de lunettes à obturateur (100) pour sa commutation entre l'état activé et l'état désactivé, dans lequel la seconde lentille à obturateur (102 104) est commutée de l'état désactivé à l'état activé pendant la période de transmission d'image (TP1') correspondant à la seconde image spécifique (R1) et reste en continu dans l'état activé pour demeurer de ce fait dans l'état activé pendant une période de stabilisation d'image (TH1') correspondant à la seconde image spécifique ; et
la commande d'un module de rétroéclairage (114) de l'appareil de sortie vidéo (110) pour rester dans un état activé pendant la période de stabilisation d'image correspondant à la première image spécifique et la période de stabilisation d'image correspondant à la seconde image spécifique, et pour rester dans un état désactivé pendant la période de transmission d'image correspondant à la seconde image spécifique ;
dans lequel une parmi la première lentille à obturateur (102, 104) et la seconde lentille à obturateur (102, 104) est utilisée pour visualiser les images d'oeil gauche, et l'autre parmi la première lentille à obturateur (102, 104) et la seconde lentille à obturateur (102, 104) est utilisée pour visualiser les images d'oeil droit ; une période d'activation de premier obturateur (P1) se trouve entre un point final de la période de stabilisation d'image correspondant à la première image spécifique et un point de temps auquel la première lentille à obturateur (102, 104) est commutée de l'état activé à l'état désactivé pendant la période de transmission d'image correspondant à la seconde image spécifique ; une période d'activation de second obturateur (P1') se trouve entre un point de temps auquel la seconde lentille à obturateur (102, 104) est commutée de l'état désactivé à l'état activé pendant la période de transmission d'image correspondant à la seconde image spécifique et un point final de la période de transmission d'image correspondant à la seconde image spécifique ; la période d'activation de premier obturateur est au moins partiellement chevauchée par la période d'activation de second obturateur, et une longueur d'une période de temps durant laquelle le module de rétroéclairage (114) reste dans l'état désactivé pendant la période de transmission d'image correspondant à la seconde image spécifique est égale à une longueur de la période de transmission d'image correspondant à la seconde image spécifique.

2. Procédé selon la revendication 1, **caractérisé en ce que** la première lentille à obturateur (102, 104) et la seconde lentille à obturateur (102, 104) restent simultanément dans l'état activé uniquement pendant une période de temps continue unique de la période de transmission d'image correspondant à la seconde image spécifique.

3. Appareil de sortie vidéo (110) et paire de lunettes à obturateur (100) utilisée pour visualiser des images stéréoscopiques présentées par l'appareil de sortie vidéo (110), l'appareil de sortie vidéo (110) produisant respectivement une première image et une seconde image durant une pluralité de périodes de sortie d'image, en alternance, une parmi la première image et la seconde image étant une image d'oeil gauche, l'autre parmi la première image et la seconde image étant une image d'oeil droit, chacune des périodes de sortie d'image comprenant une période de transmission d'image et une période de stabilisation d'image suivant immédiatement, la paire de lunettes à obturateur (100) comprenant: une première lentille à obturateur (102, 104) ;
une seconde lentille à obturateur (102, 104), dans lequel une parmi la première lentille à obturateur (102, 104) et la seconde lentille à obturateur (102, 104) est utilisée pour visualiser les images d'oeil gauche, et l'autre parmi la première lentille à obturateur (102, 104) et la seconde lentille à obturateur (102, 104) est utilisée pour visualiser les images d'oeil droit ; et
l'appareil de sortie vidéo (110) et la paire de lunettes à obturateur (100) étant **caractérisés par** :
un module de rétroéclairage (114) de l'appareil de sortie vidéo (110) ; et
un circuit de commande (106), connecté électriquement à la première lentille à obturateur (102, 104) et la seconde lentille à obturateur (102, 104), disposé pour commander la commutation de la première lentille à obturateur (102, 104) entre un état activé et un état désactivé et commander la commutation de la seconde lentille à obturateur (102, 104) entre l'état activé et l'état désactivé ; commander la première lentille à obturateur (102, 104) pour rester dans l'état activé pendant une période de stabilisation d'image correspondant à une première image spécifique, et pour rester en continu dans l'état activé jusqu'à ce que la première lentille à obturateur (102, 104) soit commutée de l'état activé à l'état désactivé pendant une période de transmission d'image correspondant à une seconde image spécifique suivant immédiatement la première image spécifique ; commander la seconde lentille à obturateur (102, 104) pour sa commutation de l'état désactivé à l'état activé pendant la période de transmission d'image correspondant à la seconde image spécifique, et pour rester en continu dans l'état activé pour demeurer de ce fait dans l'état activé pendant une période de stabilisation d'image correspondant à la seconde image spécifique, et commander le module de rétroéclairage (114) pour rester dans un état activé pendant la période de stabilisation d'image correspondant à la première image spécifique et la période de stabilisation d'image correspondant à la seconde image spécifique, et pour rester dans un état désactivé pendant la période de transmission d'image correspondant à la seconde image spécifique ;
dans lequel une période d'activation de premier obturateur se trouve entre un point final de la période de stabilisation d'image correspondant à la première image spécifique et un point de temps auquel la première lentille à obturateur (102, 104) est commutée de l'état activé à l'état désactivé pendant la période de transmission d'image correspondant à la seconde image spécifique ; une période d'activation de second obturateur se trouve entre un point de temps auquel la seconde lentille à obturateur (102, 104) est commutée de l'état désactivé à l'état activé pendant la période de transmission d'image correspondant à la seconde image spécifique et un point final de la période de transmission d'image correspondant à la seconde image spécifique ; la période d'activation de premier obturateur est au moins partiellement chevauchée par la période d'activation de second obturateur, et une longueur d'une période de temps durant laquelle le module de rétroéclairage (114) reste dans l'état désactivé pendant la période de transmission d'image correspondant à la seconde image spécifique est égale à une longueur de la période de transmission d'image correspondant à la seconde image spécifique.

4. Paire de lunettes à obturateur (100) selon la revendication 3, **caractérisée en ce que** le circuit de commande (106) commande la première lentille à obturateur (102, 104) et la seconde lentille à obturateur (102, 104) pour rester simultanément dans l'état activé uniquement pendant une période de temps continue unique de la période de transmission d'image correspondant à la seconde image spécifique.

5. Paire de lunettes à obturateur (100) selon la revendication 3 ou procédé selon la revendication 1, **caractérisé en ce qu'**une longueur de la période d'activation de premier obturateur est égale à une longueur de la période de transmission d'image correspondant à la seconde image spécifique, et une longueur de la période d'activation de second obturateur est égale à une longueur de la période de transmission d'image correspondant à la seconde image spécifique.

6. Procédé de commande d'un appareil de sortie vidéo (110) et d'une paire de lunettes à obturateur (100) utilisée pour visualiser des images stéréoscopiques présentées par l'appareil de sortie vidéo (110), l'appareil de sortie vidéo (110) produisant un groupe de premières images et un groupe de secondes images, en alternance, l'appareil de sortie vidéo (110) produisant successivement une première image primaire (L1) et la même image en tant qu'au moins une première image secondaire (L1'), incluse dans le groupe de premières images dans l'ordre, pendant une pluralité de périodes continues de sortie de premières images, respectivement, l'appareil de sortie vidéo (110) produisant successivement une seconde image primaire (R1) et la même image en tant qu'au moins une seconde image secondaire (R1'), incluse dans le groupe de secondes images dans l'ordre, pendant une pluralité de périodes continues de sortie de secondes images, respectivement, un parmi le groupe de premières images et le groupe de secondes images étant un groupe d'images d'oeil gauche, l'autre parmi le groupe de premières images et le groupe de secondes images étant un groupe d'images d'oeil droit, le procédé comprenant :
la commande d'une première lentille à obturateur (102, 104) de la paire de lunettes à obturateur (100) pour sa commutation entre un état activé et un état désactivé, dans lequel la première lentille à obturateur (102, 104) reste dans l'état activé pendant une période de sortie de première image (TP1') correspondant à une première image secondaire spécifique, et reste en continu dans l'état activé jusqu'à ce que la première lentille à obturateur (102, 104) soit commutée de l'état activé à l'état désactivé pendant une période de sortie de seconde image (TP2) correspondant à une seconde image primaire spécifique suivant immédiatement la première image secondaire spécifique ;
la commande d'une seconde lentille à obturateur (102, 104) de la paire de lunettes à obturateur (100) pour sa commutation entre l'état activé et l'état désactivé, dans lequel la seconde lentille à obturateur (102, 104) est commutée de l'état désactivé à l'état activé pendant la période de sortie de seconde image (TP2) correspondant à la seconde image primaire spécifique, et reste en continu dans l'état activé pour demeurer de ce fait dans l'état activé pendant une période de sortie de seconde image (TP2') correspondant à une seconde image secondaire spécifique suivant immédiatement la seconde image primaire spécifique ; et
la commande d'un module de rétroéclairage (114) de l'appareil de sortie vidéo (110) pour rester dans un état activé pendant la période de sortie de première image correspondant à la première image secondaire spécifique et la période de sortie de seconde image correspondant à la seconde image secondaire spécifique, et pour rester dans un état désactivé pendant la période de sortie de seconde image (TP2) correspondant à la seconde image primaire spécifique ;
dans lequel une parmi la première lentille à obturateur (102, 104) et la seconde lentille à obturateur (102, 104) est utilisée pour visualiser les images d'oeil gauche, et l'autre parmi la première lentille à obturateur (102, 104) et la seconde lentille à obturateur (102, 104) est utilisée pour visualiser les images d'oeil droit ;
une période d'activation de premier obturateur (P1) se trouve entre un point final de la période de sortie de première image correspondant à la première image secondaire spécifique et un point de temps auquel la première lentille à obturateur (102, 104) est commutée de l'état activé à l'état désactivé pendant la période de sortie de seconde image correspondant à la seconde image primaire spéci-fique ; une période d'activation de second obturateur (P1') se trouve entre un point de temps auquel la seconde lentille à obturateur (102, 104) est commutée de l'état désactivé à l'état activé pendant la période de sortie de seconde image correspondant à la seconde image primaire spécifique et un point final de la période de sortie de seconde image correspondant à la seconde image primaire spécifique ; la période d'activation de premier obturateur est au moins partiellement chevauchée par la période d'activation de second obturateur, et une longueur d'une période de temps durant laquelle le module de rétroéclairage (114) reste dans l'état désactivé pendant la période de sortie de seconde image correspondant à la seconde image primaire spécifique est égale à une longueur de la période de sortie de seconde image correspondant à la seconde image primaire spécifique.

7. Procédé selon la revendication 6, **caractérisé en ce que** la première lentille à obturateur (102, 104) et la seconde lentille à obturateur (102, 104) restent simultanément dans l'état activé uniquement pendant une période de temps continue unique de la période de sortie de seconde image correspondant à la seconde image primaire spécifique.

8. Appareil de sortie vidéo (110) et paire de lunettes à obturateur (100) utilisée pour visualiser des images stéréoscopiques présentées par l'appareil de sortie vidéo (110), l'appareil de sortie vidéo (110) produisant un groupe de premières images et un groupe de secondes images, en alternance, l'appareil de sortie vidéo produisant successivement une première image primaire et la même image en tant qu'au moins une première image secondaire, incluse dans le groupe de premières images dans l'ordre, pendant une pluralité de périodes continues de sortie de premières images, respectivement, l'appareil de sortie vidéo (110) produisant successivement une seconde image primaire et la même image en tant qu'au moins une seconde image secondaire, incluse dans le groupe de secondes images dans l'ordre, pendant une pluralité de périodes continues de sortie de secondes images, respectivement, un parmi le groupe de premières images et le groupe de secondes images étant un groupe d'images d'oeil gauche, l'autre parmi le groupe de premières images et le groupe de secondes images étant un groupe d'images d'oeil droit, la paire de lunettes à obturateur (100) comprenant :
une première lentille à obturateur (102, 104) ;
une seconde lentille à obturateur (102, 104), dans lequel une parmi la première lentille à obturateur (102, 104) et la seconde lentille à obturateur (102, 104) est utilisée pour visualiser les images d'oeil gauche, et l'autre parmi la première lentille à obturateur (102, 104) et la seconde lentille à obturateur (102, 104) est utilisée pour visualiser les images d'oeil droit ; et
l'appareil de sortie vidéo (110) et la paire de lunettes à obturateur (100) étant **caractérisés par**: un module de rétroéclairage (114) de l'appareil de sortie vidéo (110) ; et
un circuit de commande (106), connecté électriquement à la première lentille à obturateur (102, 104) et à la seconde lentille à obturateur (102, 104), disposé pour commander la commutation de la première lentille à obturateur (102, 104) entre un état activé et un état désactivé et commander la commutation de la seconde lentille à obturateur (102, 104) entre l'état activé et l'état désactivé ; commander la première lentille à obturateur (102, 104) pour rester dans l'état activé pendant une période de sortie de première image correspondant à une première image secondaire spécifique, et pour rester en continu dans l'état activé jusqu'à ce que la première lentille à obturateur (102, 104) soit commutée de l'état activé à l'état désactivé pendant une période de sortie de seconde image correspondant à une seconde image primaire spécifique suivant immédiatement la première image secondaire spécifique ; commander la seconde lentille à obturateur (102, 104) pour sa commutation de l'état désactivé à l'état activé pendant la période de sortie de seconde image correspondant à la seconde image primaire spécifique, et pour rester en continu dans l'état activé pour demeurer de ce fait dans l'état activé pendant une période de sortie de seconde image suivant immédiatement la seconde image primaire spécifique, et commander le module de rétroéclairage (114) pour rester dans un état activé pendant la période de sortie de première image correspondant à la première image secondaire spécifique et la période de sortie de seconde image correspondant à la seconde image secondaire spécifique, et pour rester dans un état désactivé pendant la période de sortie de seconde image correspondant à la seconde image primaire spécifique ;
dans lequel une période d'activation de premier obturateur se trouve entre un point final de la période de sortie de première image correspondant à la première image secondaire spécifique et un point de temps auquel la première lentille à obturateur (102, 104) est commutée de l'état activé à l'état désactivé pendant la période de sortie de seconde image correspondant à la seconde image primaire spécifique ; une période d'activation de second obturateur se trouve entre un point de temps auquel la seconde lentille à obturateur (102, 104) est commutée de l'état désactivé à l'état activé pendant la période de sortie de seconde image correspondant à la seconde image primaire spécifique et un point final de la période de sortie de seconde image correspondant à la seconde image primaire spécifique ; la période d'activation de premier obturateur est au moins partiellement chevauchée par la période d'activation de second obturateur, et une longueur d'une période de temps durant laquelle le module de rétroéclairage (114) reste dans l'état désactivé pendant la période de sortie de seconde image correspondant à la seconde image primaire spécifique est égale à une longueur de la période de sortie de seconde image correspondant à la seconde image primaire spécifique.

9. Paire de lunettes à obturateur (100) selon la revendication 8, **caractérisée en ce que** le circuit de commande (106) commande la première lentille à obturateur (102, 104) et la seconde lentille à obturateur (102, 104) pour rester simultanément dans l'état activé uniquement pendant une période de temps continue unique de la période de sortie de seconde image correspondant à la seconde image primaire spécifique.

10. Paire de lunettes à obturateur (100) selon la revendication 8 ou procédé selon la revendication 6, **caractérisé en ce qu'**une somme des longueurs de toutes les premières images secondaires dans le groupe de premières images est supérieure ou égale à une longueur de la première image primaire dans le groupe de premières images, et une somme des longueurs de toutes les secondes images secondaires dans le groupe de secondes images est supérieure ou égale à une longueur de la seconde image primaire dans le groupe de secondes images.

11. Paire de lunettes à obturateur (100) selon la revendication 8 ou procédé selon la revendication 6, **caractérisé en ce qu'**une longueur de la période d'activation de premier obturateur est égale à une longueur de la période de sortie de seconde image correspondant à la seconde image primaire spécifique, et une longueur de la période d'activation de second obturateur est égale à une longueur de la période de sortie de seconde image correspondant à la seconde image primaire spécifique.
